# EUROPEAN PATENT APPLICATION

(11) **EP 4 692 924 A1**
(43) Date of publication of application: **11.02.2026**
(21) Application number: 24797371.2
(22) Date of filing: 23.04.2024
(51) Int. Cl.: G03B 5/00, G03B 3/10, G03B 13/36, G03B 17/12, H04N 23/54, H04N 23/55, H02K 41/035

(54) **CAMERA AND ELECTRONIC DEVICE INCLUDING CAMERA**

(30) Priority: 25.04.2023 KR 20230054281; 29.06.2023 KR 20230083942
(71) Applicant: Samsung Electronics Co., Ltd., Suwon-si, Gyeonggi-do 16677 (KR)
(72) Inventor: OH, Jooyoung, Suwon-si, Gyeonggi-do 16677 (KR); HWANG, Youngjae, Suwon-si, Gyeonggi-do 16677 (KR); YU, Hyunho, Suwon-si, Gyeonggi-do 16677 (KR)
(74) Representative: HGF
(86) International application number: PCT/KR2024/005440
(87) International publication number: WO 2024/225715

(57) **Abstract**

Disclosed is an electronic device including a camera comprising: a first carrier that can be moved by electromagnetic force; and a first actuator that includes a first magnet and a first coil for moving the first carrier. The first magnet includes: a first-type magnet having a magnetic field directed from the outside of the first magnet to the first coil; a second-type magnet having a magnetic field directed from the first coil to the outside of the first magnet; and a third-type magnet arranged between the first-type magnet and the second-type magnet and having a magnetic field flowing from the second-type magnet to the first-type magnet. The size of the third-type magnet may be less than or equal to the distance between the center of a first stretched part of the first coil and the center of a second stretched part of the first coil. Various other embodiments are also possible.

## Description

### [Technical Field]

The disclosure relates to a camera and an electronic device including the same.

### [Background Art]

Various electronic devices, such as a smartphone, a tablet PC, a portable multimedia player (PMP), a personal digital assistant (PDA), a laptop personal computer (PC), and a wearable device such as a wrist watch or a head-mounted display (HMD), may include a camera and may capture an image using the camera.

When capturing an image using a camera included in an electronic device, correction for shaking of the electronic device may be required to obtain a clear image.

Optical image stabilizers (OIS) used in general cameras include a camera tilting type and a lens shift type.

When adjusting the focus of an image or correcting shaking of an image using an auto focus (AF) and/or image stabilizer (IS) actuator, a driving force may be generated based on electromagnetic force using a magnet and a coil.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

A camera and an electronic device including the camera according to an embodiment of the disclosure are intended to improve the efficiency of driving force by concentrating the magnetic flux of a magnet toward a coil when generating the driving force based on electromagnetic force using a magnet and a coil in order to adjust the focus of an image or correct shaking of the image using an AF and/or IS actuator.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

In an electronic device including a camera according to an embodiment of the disclosure, the camera may include a first carrier configured to be movable by electromagnetic force and a first actuator including a first magnet and a first coil configured to move the first carrier.

The first magnet according to an embodiment of the disclosure may include a first-type magnet having a magnetic field directed from the outside of the first magnet toward the first coil, a second-type magnet having a magnetic field directed from the first coil toward the outside of the first magnet, and a third-type magnet disposed between the first-type magnet and the second-type magnet and having a magnetic field flowing from the second-type magnet to the first-type magnet.

According to an embodiment of the disclosure, the third-type magnet may have a size that is less than or equal to a distance between a center of a first stretched portion of a first coil and a center of a second stretched portion of the first coil.

According to an embodiment of the disclosure, the camera may include a first carrier configured to be movable by electromagnetic force, and a first actuator including a first magnet and a first coil configured to move the first carrier.

According to an embodiment of the disclosure, the first magnet of the camera may include a first-type magnet having a magnetic field directed from the outside of the first magnet toward the first coil, a second-type magnet having a magnetic field directed from the first coil toward the outside of the first magnet, and a third-type magnet disposed between the first-type magnet and the second-type magnet and having a magnetic field flowing from the second-type magnet to the first-type magnet.

According to an embodiment of the disclosure, the third-type magnet of the camera may have a size that is less than or equal to a distance between a center of a first stretched portion of the first coil and a center of a second stretched portion of the first coil.

### [Advantageous Effects of Invention]

According to an embodiment of the disclosure, a camera and an electronic device including the same may improve the driving force of an actuator by concentrating the magnetic flux of an IS magnet and an AF magnet toward a coil.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a block diagram of an electronic device according to an embodiment of the disclosure in a network environment.
FIG. 2 is a block diagram exemplifying a camera module according to an embodiment.
FIG. 3 is an exploded view illustrating a camera according to an embodiment of the disclosure.
FIG. 4A is a view illustrating a third IS actuator according to an embodiment of the disclosure.
FIG. 4B is a view illustrating a fourth IS actuator according to an embodiment of the disclosure.
FIG. 4C is a view illustrating a fifth IS actuator according to an embodiment of the disclosure.
FIG. 4D is a view illustrating a sixth IS actuator according to an embodiment of the disclosure.
FIG. 4E is a view illustrating a seventh IS actuator according to an embodiment of the disclosure.
FIG. 5A is a view illustrating a first AF actuator according to an embodiment of the disclosure.
FIG. 5B is a view illustrating a second AF actuator according to an embodiment of the disclosure.
FIG. 5C is a view illustrating a third AF actuator according to an embodiment of the disclosure.
FIG. 5D is a view illustrating a fourth AF actuator according to an embodiment of the disclosure.
FIG. 6A is a schematic view illustrating a magnetic field of an eighth IS actuator according to an embodiment of the disclosure.
FIG. 6B is a view illustrating a magnetic field distribution when a ninth IS actuator and a tenth IS actuator according to an embodiment of the disclosure are disposed in the camera of FIG. 3.
FIG. 7A is a schematic view illustrating a magnetic field of a fifth AF actuator according to an embodiment of the disclosure.
FIG. 7B is a view illustrating a magnetic field distribution when the fifth AF actuator according to an embodiment of the disclosure are disposed in the camera of FIG. 3.
FIG. 8A is a view illustrating a range in which a magnet having a magnetic field substantially parallel to the direction of coils is disposed in an eleventh IS actuator according to an embodiment of the disclosure.
FIG. 8B is a view illustrating a range in which a magnet having a magnetic field substantially parallel to the direction of coils is disposed in an eleventh IS actuator according to an embodiment of the disclosure.
FIG. 9A is a view illustrating a range in which a magnet having a magnetic field substantially parallel to the direction of coils is disposed in the fifth AF actuator according to an embodiment of the disclosure.
FIG. 9B is a view illustrating a range in which a magnet having a magnetic field substantially parallel to the direction of coils is disposed in the fifth AF actuator according to an embodiment of the disclosure.
FIG. 10 is a view illustrating a graph representing the driving force according to the size of a twelfth magnet of the third IS actuator according to an embodiment of the disclosure, and a graph representing the driving force of a typical camera IS actuator.
FIG. 11 is a view illustrating a graph representing the driving force according to the size of a twenty-ninth magnet of the first AF actuator according to an embodiment of the disclosure, and a graph representing the driving force of a typical camera AF actuator.
FIG. 12 is a view illustrating a graph representing the magnetic force density of the third IS actuator according to an embodiment of the disclosure, a graph representing the magnetic force density of the fifth IS actuator, and a graph representing the magnetic force density of a typical camera IS actuator.
FIG. 13 is a perspective view illustrating a camera according to an embodiment of the disclosure.
FIG. 14 is an exploded perspective view illustrating the camera of FIG. 13.
FIG. 15 is a view illustrating a first long-stroke AF actuator.
FIG. 16 is an exploded view illustrating a camera according to an embodiment of the disclosure.

### [Mode for the Invention]

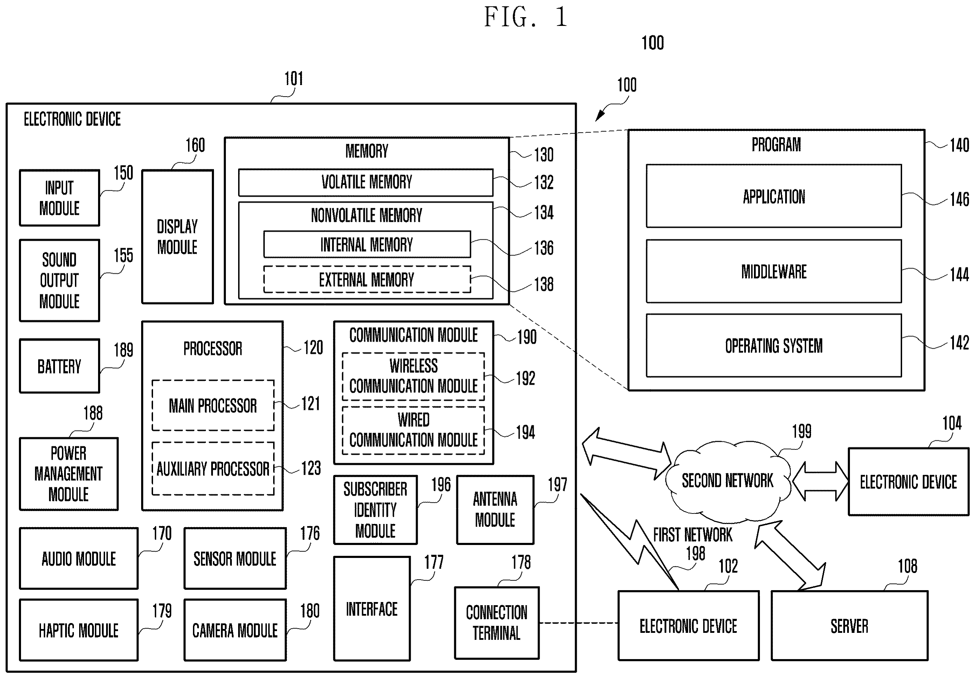

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

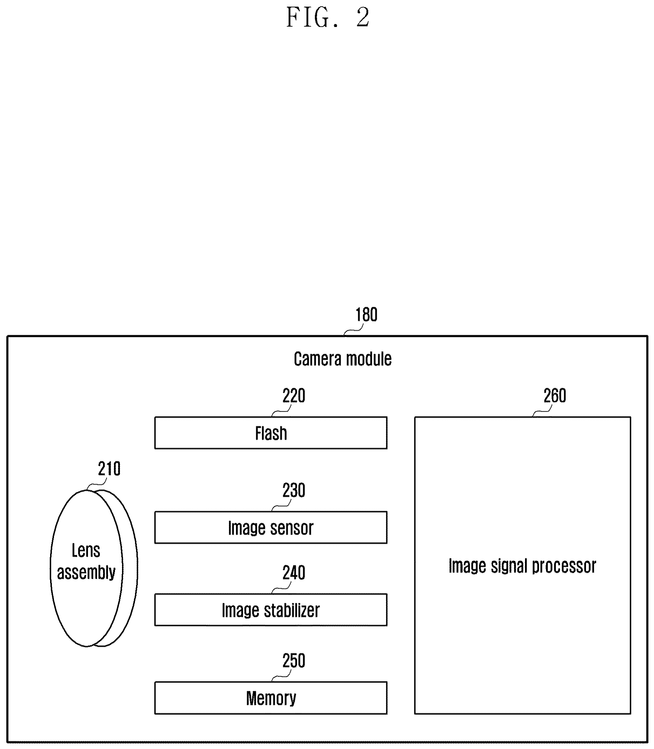

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

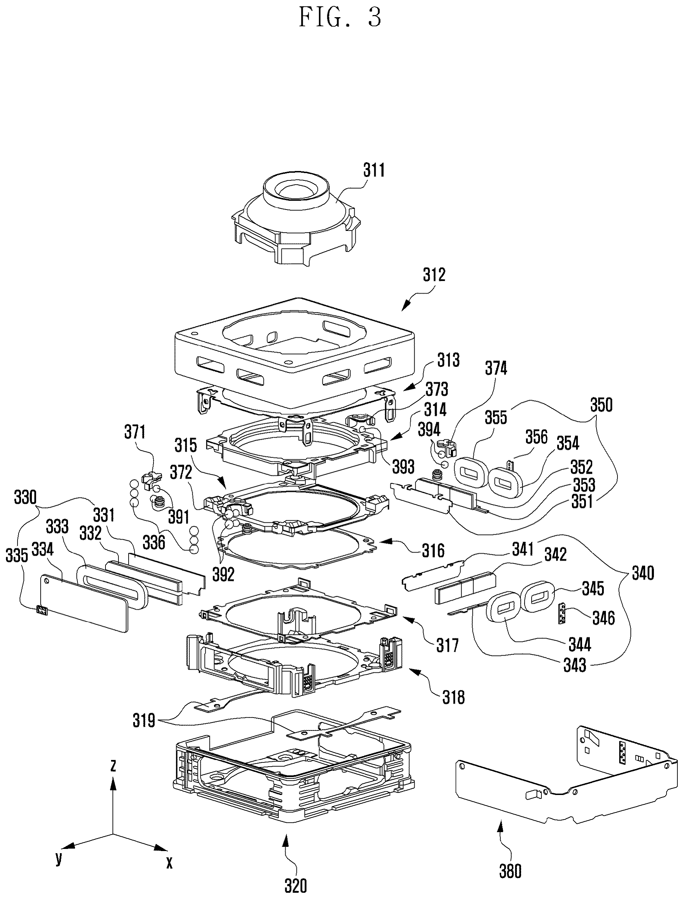

FIG. 3 is an exploded view illustrating a camera 300 according to an embodiment of the disclosure.

The camera 300 according to an embodiment of the disclosure may include a lens assembly 311, a shield can 312, a stopper 313, an image stabilizer (IS) carrier 314, a middle guide 315, a middle guide insert member 316, an auto focus (AF) carrier insert member 317, an auto focus (AF) carrier 318, a housing insert member 319, a camera housing 320, an AF actuator 330, a first IS actuator 340, a second IS actuator 350, a flexible printed circuit board (FPCB) 380, a plurality of AF balls 336, a plurality of dampers 371, 372, 373, and 374, and a plurality of IS balls 391, 392, 393, and 394.

In an embodiment, the camera 300 may adjust focus by moving the AF carrier 318 under the control of the processor 120. The camera 300 may correct image shake by moving the IS carrier 314 under the control of the processor 120.

In an embodiment, the lens assembly 311 may include at least one lens aligned and assembled. The lens assembly 311 may be a lens barrel in which one or more lenses are assembled.

In an embodiment, the shield can 312 may be positioned at the outermost perimeter of the camera 300 and may surround the stopper 313, the IS carrier 314, the middle guide 315, the middle guide insert member 316, the AF carrier insert member 317, the AF carrier 318, the housing insert member 319, and the camera housing 320.

In an embodiment, the shield can 312 may block or reduce electromagnetic waves generated externally, so as to reduce malfunctions of the camera 300.

In an embodiment, the stopper 313 may be coupled or fitted to the AF carrier 318. The stopper 313 may prevent the IS carrier 314 from being detached.

In an embodiment, the stopper 313 may include an opening corresponding to the lens assembly 311. At least a portion of the lens assembly 311 may move through the opening of the stopper 313.

In an embodiment, the first IS actuator 340 may drive the IS carrier 314 in a second axis (e.g., the x-axis) direction, and the second IS actuator 350 may drive the IS carrier 314 in a first axis (e.g., the y-axis) direction.

In an embodiment, the IS carrier 314 may have the first IS actuator 340 and the second IS actuator 350 disposed orthogonal to the first axis (e.g., the y-axis) and the second axis (e.g., the x-axis) of the IS carrier 314.

In an embodiment, the IS carrier 314 may include an opening corresponding to the lens assembly 311.

In an embodiment, the plurality of IS balls 391, 392, 393, and 394 may guide the movement of the IS carrier 314 when the IS carrier 314 is moved by the electromagnetic force of the first IS actuator 340 and/or the second IS actuator 350.

In an embodiment, the plurality of IS balls 391, 392, 393, and 394 may guide movement of the IS carrier 314 in the x-axis direction and in the y-axis direction.

In an embodiment, the plurality of IS balls 391, 392, 393, and 394 may include at least three balls and may be disposed at positions corresponding to four corners of the IS carrier 314 having a substantially rectangular shape. In an embodiment, each of the plurality of IS balls 391, 392, 393, and 394 may be a ball bearing.

In an embodiment, the middle guide 315 may prevent the IS carrier 314 and/or the lens assembly 311 from rotating when the IS carrier 314 moves along the x-axis and/or y-axis for shake correction.

In an embodiment, the middle guide insert member 316 may increase or supplement the rigidity of the middle guide 315.

In an embodiment, the AF carrier insert member 317 may increase or supplement the rigidity of the AF carrier 318.

In an embodiment, the AF carrier 318 may include the AF magnet 332 disposed thereon.

In an embodiment, at least a portion of the AF actuator 330 may be disposed on the AF carrier 318.

In an embodiment, the AF carrier 318 may move in the Z-axis direction by an electromagnetic force generated by the AF actuator 330.

In an embodiment, the AF actuator 330 may include the AF magnet 332 and the AF coil 333. The AF actuator 330 may be configured to generate an electromagnetic force between the AF magnet 332 and the AF coil 333 so as to move the AF carrier 318 in the Z-axis direction.

In an embodiment, the AF carrier 318 may be coupled to the camera housing 320. A plurality of AF balls 336 may be disposed between the AF carrier 318 and the camera housing 320.

In an embodiment, the plurality of AF balls 336 may guide the movement of the AF carrier 318 when the AF carrier 318 is moved by the electromagnetic force between the AF magnet 332 and the AF coil 333.

In an embodiment, the plurality of AF balls 336 may be respectively disposed on opposite sides (e.g., opposite sides in the X-axis direction) of the AF magnet 332 with respect to the AF actuator 330.

In an embodiment, the plurality of AF balls 336 may guide the movement of the AF carrier 318 in the Z-axis direction.

In an embodiment, each of the plurality of AF balls 336 may be a ball bearing.

In an embodiment, a plurality of dampers 371, 372, 373, and 374 may mitigate impact when the AF carrier 318 and/or the IS carrier 314 is moved.

In an embodiment, when the IS carrier 314 moves and collides with an inner side of the AF carrier 318, the plurality of dampers 371, 372, 373, and 374 may mitigate the impact of the IS carrier 314.

In an embodiment, the camera housing 320 may be located inside the shield can 313. The camera housing 320 may be coupled or fitted into the shield can 313.

In an embodiment, the camera housing 320 may be at least partially coupled to the IS carrier 314, the middle guide 315, and the AF carrier 318.

In an embodiment, the camera housing 320 may prevent and protect the IS carrier 314, the middle guide 315, and the AF carrier 318 from being separated due to movement.

In an embodiment, the housing insert member 319 may increase or supplement the rigidity of the camera housing 320.

In an embodiment, the FPCB 380 may surround the outer perimeter of the camera housing 320.

In an embodiment, the FPCB 380 may include at least a portion of the AF actuator 330, at least a portion of the first IS actuator 340, and at least a portion of the second IS actuator 350.

In an embodiment, the AF actuator 330 may include an AF magnet insert yoke 331, an AF magnet 332, an AF coil 333, an AF back yoke 334, and at least one AF magnet detection sensor 335.

In an embodiment, the AF magnet insert yoke 331 may prevent the magnetic flux of the AF magnet 332 from leaking.

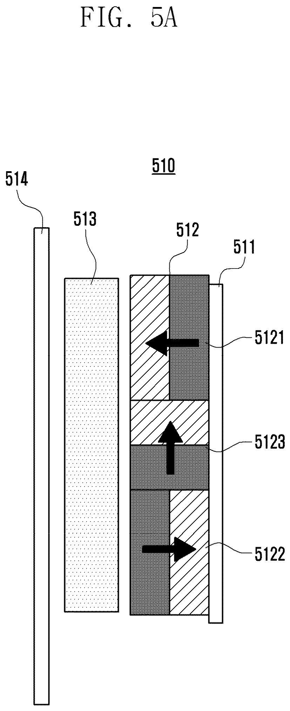

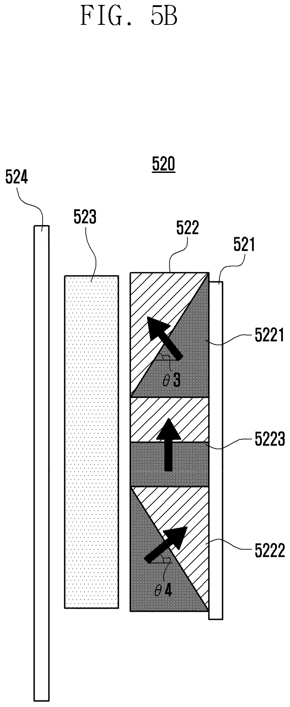

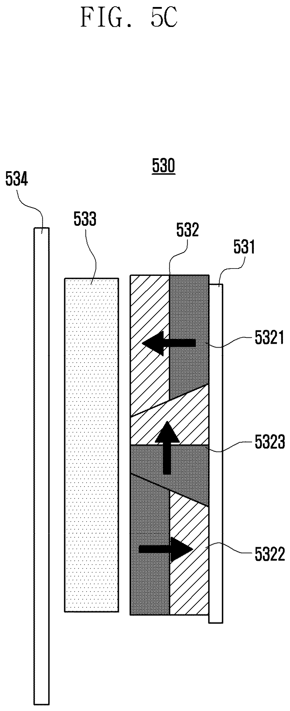

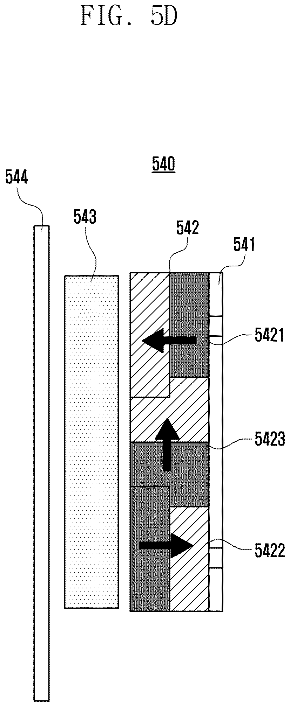

In an embodiment, the AF magnet 332 may include at least three magnets. The AF magnet 332 may include a first magnet (e.g., the 27^{th} magnet 5121 of FIG. 5A), a second magnet (e.g., the 28^{th} magnet 5122 of FIG. 5A), and/or a third magnet (e.g., the 29^{th} magnet 5123 of FIG. 5). The third magnet (e.g., the 29^{th} magnet 5123 of FIG. 5) may be disposed between the first magnet (e.g., the 27^{th} magnet 5121 of FIG. 5A) and the second magnet (e.g., the 28^{th} magnet 5122 of FIG. 5A).

In an embodiment, a magnetic field of the first magnet (e.g., the 27^{th} magnet 5121 of FIG. 5A) may be directed from the AF magnet insert yoke 331 toward the AF coil 333. A magnetic field of the second magnet (e.g., the 28^{th} magnet 5122 of FIG. 5A) may be directed from the AF coil 333 toward the AF magnet insert yoke 331.

In an embodiment, the third magnet (e.g., the 29^{th} magnet 5123 of FIG. 5) may be disposed in a direction orthogonal to the directions of the magnetic fields of the first magnet (e.g., the 27^{th} magnet 5121 of FIG. 5A) and the second magnet (e.g., the 28^{th} magnet 5122 of FIG. 5A). For example, a magnetic field of the third magnet (e.g., the 29^{th} magnet 5123 of FIG. 5) may be directed from the second magnet (e.g., the 28^{th} magnet 5122 of FIG. 5A) toward the first magnet (e.g., the 27^{th} magnet 5121 of FIG. 5A).

In an embodiment, at least one AF magnet detection sensor 335 may be disposed in a hole or at a center of the AF coil 333.

In an embodiment, the at least one AF magnet detection sensor 335 may detect a position of the AF magnet 332.

For example, at least one AF magnet detection sensor 335 may include at least one driving IC (not illustrated). The driving IC (not illustrated) may control a current flowing through the AF coil 333 to change an electromagnetic force between the AF magnet 332 and the AF coil 333 so as to move the AF carrier 318 along the Z-axis direction.

In an embodiment, the AF back yoke 334 may include a metal material and may allow the AF carrier 318 to maintain its position in the camera housing 320 through magnetic force with the AF magnet 332. The AF back yoke 334 may prevent the magnetic flux of the AF magnet 332 from leaking.

In an embodiment, the FPCB 380 may support the AF coil 333.

In an embodiment, the first IS actuator 340 may include a first IS back yoke 341, a first IS yoke 343, a first IS magnet 342, a first IS coil 344, a second IS coil 345, and at least one first IS magnet detection sensor 346.

In an embodiment, the first IS back yoke 341 may adjust the direction of the magnetic flux of the first IS magnet 342.

In an embodiment, the first IS yoke 343 may attract the first IS magnet 342 toward the AF carrier 318 so as to allow the IS carrier 314 to maintain its position on the AF carrier 318.

In an embodiment, the first IS magnet 342 may include at least three magnets. The first IS magnet 342 may include a fourth magnet, a fifth magnet, and/or a sixth magnet. The sixth magnet may be disposed between the fourth magnet and the fifth magnet.

In an embodiment, a magnetic field of the fourth magnet may be directed from the first IS back yoke 341 toward the first IS coil 344. A magnetic field of the fifth magnet may be directed from the second IS coil 345 toward the first IS back yoke 341.

In an embodiment, the sixth magnet may be disposed in a direction orthogonal to the magnetic field directions of the fourth magnet and the fifth magnet. For example, a magnetic field of the sixth magnet may be directed from the fifth magnet toward the fourth magnet.

In an embodiment, at least one first IS magnet detection sensor 346 and the first IS magnet 342 may detect a position of the IS carrier 314.

For example, the at least one first IS magnet detection sensor 346 may include at least one driving IC (not illustrated). The driving IC (not illustrated) may control a current flowing through the first IS coil 344 and/or the second IS coil 345 to change an electromagnetic force between the first IS magnet 342 and the coils (e.g., the first IS coil 344 and the second IS coil 345) so as to move the IS carrier 314 and/or the middle guide 315 along the second axis (e.g., the X-axis) direction.

In an embodiment, the second IS actuator 350 may include a second IS back yoke 351, a second IS yoke 353, a second IS magnet 352, a third IS coil 354, a fourth IS coil 355, and at least one second IS magnet detection sensor 356.

In an embodiment, the second IS back yoke 351 may adjust the direction of the magnetic flux of the second IS magnet 352.

In an embodiment, the second IS yoke 353 may attract the second IS magnet 352 toward the AF carrier 318 so as to allow the IS carrier 314 to maintain its position on the AF carrier 318.

In an embodiment, the second IS magnet 352 may include at least three magnets. The second IS magnet 352 may include a seventh magnet, an eighth magnet, and/or a ninth magnet. The ninth magnet may be disposed between the seventh magnet and the eighth magnet.

In an embodiment, a magnetic field of the seventh magnet may be directed from the second IS back yoke 351 toward the third IS coil 354. A magnetic field of the eighth magnet may be directed from the fourth IS coil 355 toward the second IS back yoke 351.

In an embodiment, the ninth magnet may be disposed in a direction orthogonal to the magnetic field directions of the seventh magnet and the eighth magnet. For example, a magnetic field of the ninth magnet may be directed from the eighth magnet toward the seventh magnet.

In an embodiment, the at least one second IS magnet detection sensor 356 and the second IS magnet 352 may detect a position of the IS carrier 314.

For example, the at least one second IS magnet detection sensor 356 may include at least one driving IC (not illustrated). The driving IC (not illustrated) may control a current flowing through the third IS coil 354 and/or the fourth IS coil 355 to change an electromagnetic force between the second IS magnet 352 and the coils (e.g., the third IS coil 354 and the fourth IS coil 355) so as to move the IS carrier 314 and/or the middle guide 315 along the first axis (e.g., the Y-axis) direction.

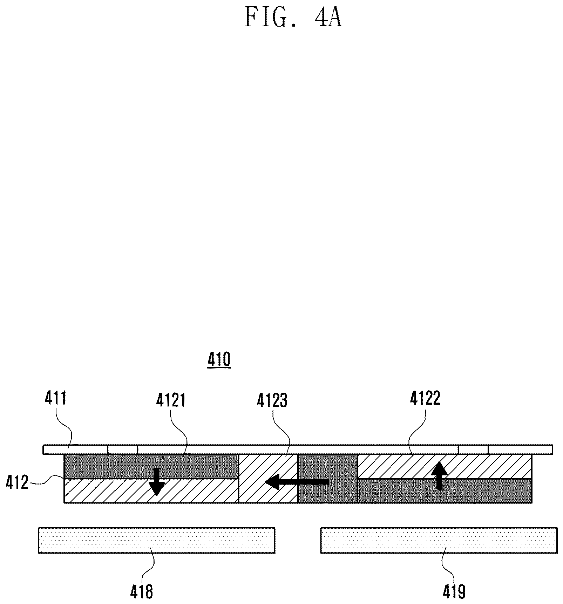

FIG. 4A is a view illustrating a third IS actuator 410 according to an embodiment of the disclosure.

In an embodiment, the third IS actuator 410 may be substantially the same as the first IS actuator 340 and/or the second IS actuator 350.

In an embodiment, the third IS actuator 410 may include a third IS back yoke 411, a third IS magnet 412, a fifth IS coil 418, and a sixth IS coil 419. The third IS actuator 410 of FIG. 4A may be described with the IS yoke and/or the IS magnet detection sensor, which is included in the first IS actuator 340 and/or the second IS actuator 350, omitted.

In an embodiment, the third IS back yoke 411 may adjust the direction of the magnetic flux of the third IS magnet 412.

In an embodiment, the third IS magnet 412 may include at least three magnets.

In an embodiment, the third IS magnet 412 may include a tenth magnet 4121, an eleventh magnet 4122, and/or a twelfth magnet 4123.

In an embodiment, the tenth magnet 4121, the eleventh magnet 4122, and/or the twelfth magnet 4123 of the third IS magnet 412 may be arranged in a Halbach array.

In an embodiment, the magnetic field of the tenth magnet 4121 may be directed from the third IS back yoke 411 toward the fifth IS coil 418. The magnetic field of the eleventh magnet 4122 may be directed from the sixth IS coil 419 toward the third IS back yoke 411.

In an embodiment, the twelfth magnet 4123 may be arranged in a direction orthogonal to the directions of the magnetic fields of the tenth magnet 4121 and the eleventh magnet 4122. For example, the magnetic field of the twelfth magnet 4123 may be directed from the eleventh magnet 4122 toward the tenth magnet 4121.

In an embodiment, by arranging the twelfth magnet 4123 in a direction orthogonal to the directions of the magnetic fields of the tenth magnet 4121 and the eleventh magnet 4122, the third IS magnet 412 may reduce magnetic flux leakage directed toward the third IS back yoke 411 and concentrate magnetic flux toward the fifth IS coil 418 and the sixth IS coil 419.

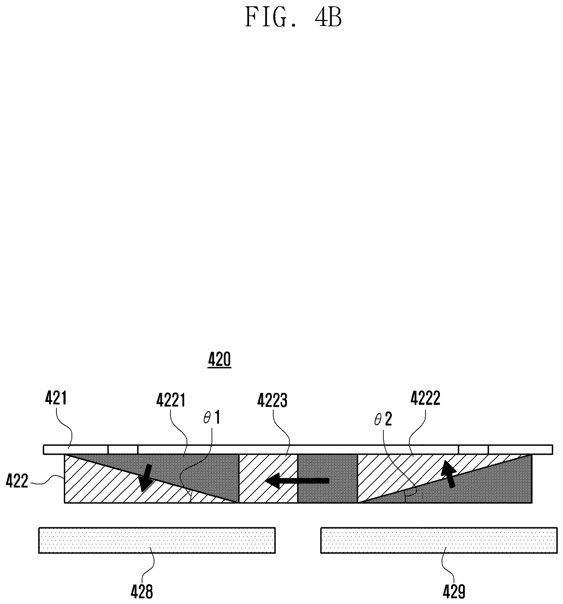

FIG. 4B is a view illustrating a fourth IS actuator 420 according to an embodiment of the disclosure.

In an embodiment, the fourth IS actuator 420 may be substantially the same as the first IS actuator 340 and/or the second IS actuator 350.

In an embodiment, the fourth IS actuator 420 may include a fourth IS back yoke 421, a fourth IS magnet 422, a seventh IS coil 428, and an eighth IS coil 429. The fourth IS actuator 420 of FIG. 4B may be described with the IS yoke and/or the IS magnet detection sensor, which is included in the first IS actuator 340 and/or the second IS actuator 350, omitted.

In an embodiment, the fourth IS back yoke 421 may adjust the direction of the magnetic flux of the fourth IS magnet 422.

In an embodiment, the fourth IS magnet 422 may include at least three magnets.

In an embodiment, the fourth IS magnet 422 may include a thirteenth magnet 4221, a fourteenth magnet 4222, and/or a fifteenth magnet 4223.

In an embodiment, the thirteenth magnet 4221, the fourteenth magnet 4222, and/or the fifteenth magnet 4223 of the fourth IS magnet 422 may be arranged in a Halbach array.

In an embodiment, the magnetic field of the thirteenth magnet 4221 may be directed toward the seventh IS coil 428 from the fourth IS back yoke 421 at an acute angle (e.g., a first angle θ1). The magnetic field of the fourteenth magnet 4222 may be directed toward the fourth IS back yoke 421 from the eighth IS coil 429 at an acute angle (e.g., a second angle θ2).

In an embodiment, the first angle θ1 and the second angle θ2 may be the same.

In an embodiment, the fifteenth magnet 4223 may be disposed between the thirteenth magnet 4221 and the fourteenth magnet 4222. For example, the magnetic field of the fifteenth magnet 4223 may be directed from the fourteenth magnet 4222 toward the thirteenth magnet 4221.

In an embodiment, the fourth IS magnet 422 may reduce magnetic flux leakage directed toward the fourth IS back yoke 421 and concentrate magnetic flux toward the seventh IS coil 428 and the eighth IS coil 429.

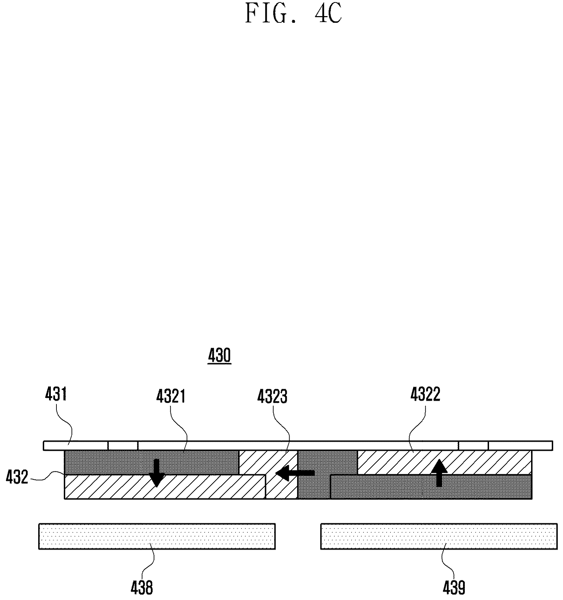

FIG. 4C is a view illustrating a fifth IS actuator 430 according to an embodiment of the disclosure.

In an embodiment, the fifth IS actuator 430 may be substantially the same as the first IS actuator 340 and/or the second IS actuator 350.

In an embodiment, the fifth IS actuator 430 may include a fifth IS back yoke 431, a fifth IS magnet 432, a ninth IS coil 438, and a tenth IS coil 439. The fifth IS actuator 430 of FIG. 4C may be described with the IS yoke and/or the IS magnet detection sensor, which is included in the first IS actuator 340 and/or the second IS actuator 350, omitted.

In an embodiment, the fifth IS back yoke 431 may adjust the direction of the magnetic flux of the fifth IS magnet 432.

In an embodiment, the fifth IS magnet 432 may include at least three magnets.

In an embodiment, the fifth IS magnet 432 may include a sixteenth magnet 4321, a seventeenth magnet 4322, and/or an eighteenth magnet 4323.

In an embodiment, the sixteenth magnet 4321, the seventeenth magnet 4322, and/or the eighteenth magnet 4323 of the fifth IS magnet 432 may be arranged in a Halbach array.

In an embodiment, the magnetic field of the sixteenth magnet 4321 may be directed from the fifth IS back yoke 431 toward the ninth IS coil 438. The magnetic field of the seventeenth magnet 4322 may be directed from the tenth IS coil 439 toward the fifth IS back yoke 431.

In an embodiment, the sixteenth magnet 4321 may have a stepped shape. The sixteenth magnet 4321 may include a step formed between a surface facing the fifth IS back yoke 431 and a surface facing the ninth IS coil 438. In the sixteenth magnet 4321, the length of the magnet corresponding to the surface facing the fifth IS back yoke 431 may be shorter than the length of the magnet corresponding to the surface facing the ninth IS coil 438.

In an embodiment, the seventeenth magnet 4322 may have a stepped shape. The seventeenth magnet 4322 may include a step formed between a surface facing the fifth IS back yoke 431 and a surface facing the tenth IS coil 439. In the seventeenth magnet 4322, the length of the magnet corresponding to the surface facing the fifth IS back yoke 431 may be shorter than the length of the magnet corresponding to the surface facing the tenth IS coil 439.

In an embodiment, the eighteenth magnet 4323 may be disposed between the sixteenth magnet 4321 and the seventeenth magnet 4322. For example, the magnetic field of the eighteenth magnet 4323 may be directed from the seventeenth magnet 4322 toward the sixteenth magnet 4321.

In an embodiment, the eighteenth magnet 4323 may have a stepped shape and/or a T shape. The eighteenth magnet 4323 may include a step formed between a surface facing the fifth IS back yoke 431 and a surface facing the IS coils (e.g., the ninth IS coil 438 and the tenth IS coil 439). In the eighteenth magnet 4323, the length of the magnet corresponding to the surface facing the fifth IS back yoke 431 may be longer than the length of the magnet corresponding to the surface facing the IS coils (e.g., the ninth IS coil 438 and the tenth IS coil 439).

In an embodiment, the fifth IS magnet 432 may reduce magnetic flux leakage toward the fifth IS back yoke 431 and concentrate magnetic flux toward the ninth IS coil 438 and the tenth IS coil 439.

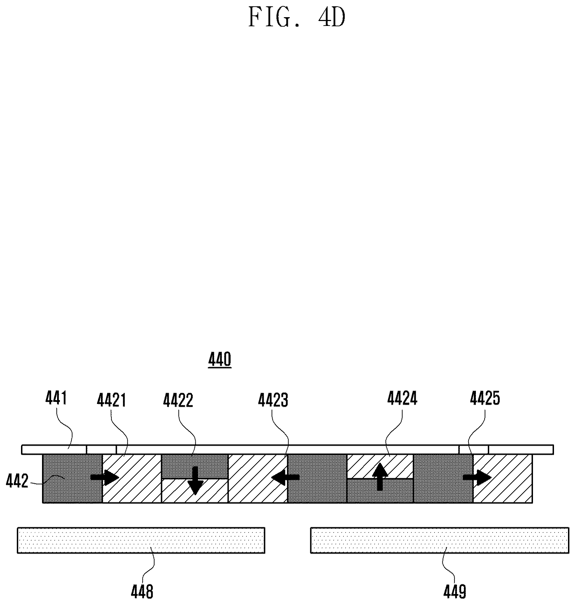

FIG. 4D is a view illustrating a sixth IS actuator 440 according to an embodiment of the disclosure.

In an embodiment, the sixth IS actuator 440 may be substantially the same as the first IS actuator 340 and/or the second IS actuator 350.

In an embodiment, the sixth IS actuator 440 may include a sixth IS back yoke 441, a sixth IS magnet 442, an eleventh IS coil 448, and a twelfth IS coil 449. The sixth IS actuator 440 of FIG. 4D may be described with the IS yoke and/or the IS magnet detection sensor, which is included in the first IS actuator 340 and/or the second IS actuator 350, omitted.

In an embodiment, the sixth IS back yoke 441 may adjust the direction of the magnetic flux of the sixth IS magnet 442.

In an embodiment, the sixth IS magnet 442 may include at least five magnets.

In an embodiment, the sixth IS magnet 442 may include a nineteenth magnet 4421, a twentieth magnet 4422, a twenty-first magnet 4423, a twenty-second magnet 4424, and/or a twenty-third magnet 4425.

In an embodiment, the nineteenth magnet 4421, the twentieth magnet 4422, the twenty-first magnet 4423, the twenty-second magnet 4424, and/or the twenty-third magnet 4425 of the sixth IS magnet 442 may be arranged in a Halbach array.

In an embodiment, the magnetic field of the twentieth magnet 4422 may be directed from the sixth IS back yoke 441 toward the eleventh IS coil 448. The magnetic field of the twenty-second magnet 4424 may be directed from the twelfth IS coil 449 toward the sixth IS back yoke 441.

In an embodiment, the nineteenth magnet 4421 may be arranged in a direction orthogonal to the directions of the magnetic fields of the twentieth magnet 4422 and the twenty-second magnet 4424. For example, the magnetic field of the nineteenth magnet 4421 may be directed from the outside of the sixth IS magnet 442 toward the twentieth magnet 4422.

In an embodiment, the twenty-first magnet 4423 may be arranged in a direction orthogonal to the directions of the magnetic fields of the twentieth magnet 4422 and the twenty-second magnet 4424. For example, the magnetic field of the twenty-first magnet 4423 may be directed from the twenty-second magnet 4424 toward the twentieth magnet 4422.

In an embodiment, the twenty-third magnet 4425 may be arranged in a direction orthogonal to the directions of the magnetic fields of the twentieth magnet 4422 and the twenty-second magnet 4424. For example, the magnetic field of the twenty-third magnet 4425 may be directed from the twenty-second magnet 4424 toward the outside of the sixth IS magnet 442.

Referring to FIGS. 4A and 4D, the sixth IS magnet 442 of FIG. 4D may further include the nineteenth magnet 4421 and the twenty-third magnet 4425 in addition to the third IS magnet 412 of FIG. 4A.

In an embodiment, the sixth IS magnet 442 may reduce magnetic flux leakage directed toward the sixth IS back yoke 441 and concentrate the magnetic flux toward the eleventh IS coil 448 and the twelfth IS coil 449.

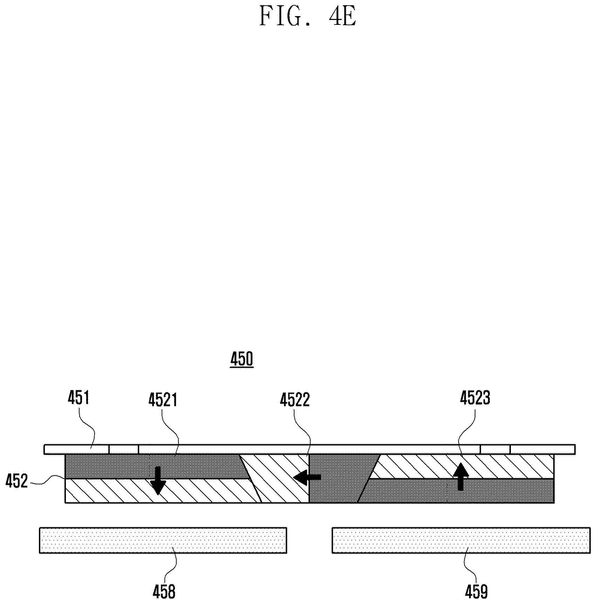

FIG. 4E is a view illustrating a seventh IS actuator 450 according to an embodiment of the disclosure.

In an embodiment, the seventh IS actuator 450 may be the same as the first IS actuator 340 and/or the second IS actuator 350.

In an embodiment, the seventh IS actuator 450 may include a seventh IS back yoke 451, a seventh IS magnet 452, a thirteenth IS coil 458, and a fourteenth IS coil 459. The seventh IS actuator 450 illustrated in FIG. 4E may be described with the IS yoke and/or the IS magnet sensing sensor, which is included in the first IS actuator 340 and/or the second IS actuator 350, omitted.

In an embodiment, the seventh IS back yoke 451 may adjust the direction of the magnetic flux of the seventh IS magnet 452.

In an embodiment, the seventh IS magnet 452 may include at least three magnets.

In an embodiment, the seventh IS magnet 452 may include a twenty-fourth magnet 4521, a twenty-fifth magnet 4522, and/or a twenty-sixth magnet 4523.

In an embodiment, the twenty-fourth magnet 4521, the twenty-fifth magnet 4522, and/or the twenty-sixth magnet 4523 of the seventh IS magnet 452 may be arranged in a Halbach array.

In an embodiment, the magnetic field of the twenty-fourth magnet 4521 may be directed from the seventh IS back yoke 451 toward the IS coils (e.g., the thirteenth IS coil 458 and the fourteenth IS coil 459).

In an embodiment, the twenty-fourth magnet 4521 may include a slope on at least a portion thereof. The twenty-fourth magnet 4521 may include a slope between a surface facing the seventh IS back yoke 451 and a surface facing the thirteenth IS coil 458. In the twenty-fourth magnet 4521, the length of the magnet corresponding to the surface facing the seventh IS back yoke 451 may be shorter than the length of the magnet corresponding to the surface facing the thirteenth IS coil 458.

In an embodiment, the magnetic field of the twenty-sixth magnet 4523 may be directed toward the seventh IS back yoke 451 from the IS coils (e.g., the thirteenth IS coil 458 and the fourteenth IS coil 459).

In an embodiment, the twenty-sixth magnet 4523 may include a slope on at least a portion thereof. The twenty-sixth magnet 4523 may include a slope between a surface facing the seventh IS back yoke 451 and a surface facing the thirteenth IS coil 458. In the twenty-sixth magnet 4523, the length of the magnet corresponding to the surface facing the seventh IS back yoke 451 may be shorter than the length of the magnet corresponding to the surface facing the fourteenth IS coil 459.

In an embodiment, the twenty-fifth magnet 4522 may be arranged in a direction orthogonal to the directions of the magnetic fields of the twenty-fourth magnet 4521 and the twenty-sixth magnet 4523. For example, the magnetic field of the twenty-fifth magnet 4522 may be directed from the twenty-sixth magnet 4523 toward the twenty-fourth magnet 4521.

In an embodiment, the twenty-fifth magnet 4522 may include a slope on at least a portion thereof. The twenty-fifth magnet 4522 may include a slope between a surface facing the seventh IS back yoke 451 and a surface facing the thirteenth IS coil 458 and/or the fourteenth IS coil 459. In the twenty-fifth magnet 4522, the length corresponding to the surface of the magnet facing the seventh IS back yoke 451 may be greater than the length of the magnet corresponding to the surface facing the thirteenth IS coil 458 and/or the fourteenth IS coil 459.

In an embodiment, the seventh IS magnet 452 may reduce magnetic flux leakage directed toward the seventh IS back yoke 451 and concentrate the magnetic flux toward the IS coils (e.g., the thirteenth IS coil 458 and/or the fourteenth IS coil 459).

FIG. 5A is a view illustrating a first AF actuator 510 according to an embodiment of the disclosure.

In an embodiment, the first AF actuator 510 may be substantially the same as the AF actuator 330.

In an embodiment, the first AF actuator 510 may include a first AF magnet insert yoke 511, a first AF magnet 512, a first AF coil 513, and/or a first AF back yoke 514.

The first AF actuator 510 of FIG. 5A may be illustrated without at least one AF magnet detection sensor.

In an embodiment, the first AF magnet 512 may include at least three magnets. The first AF magnet 512 may include a twenty-seventh magnet 5121 (e.g., the first magnet of FIG. 3), a twenty-eighth magnet 5122 (e.g., the second magnet of FIG. 3), and/or a twenty-ninth magnet 5123 (e.g., the third magnet of FIG. 3). The twenty-ninth magnet 5123 may be disposed between the twenty-seventh magnet 5121 and the twenty-eighth magnet 5122.

In an embodiment, the twenty-seventh magnet 5121, the twenty-eighth magnet 5122, and/or the twenty-ninth magnet 5123 of the first AF magnet 512 may be arranged in a Halbach array.

In an embodiment, the magnetic field of the twenty-seventh magnet 5121 may be directed from the first AF magnet insert yoke 511 toward the first AF coil 513.

In an embodiment, the magnetic field of the twenty-eighth magnet 5122 may be directed from the first AF coil 513 toward the first AF magnet insert yoke 511.

In an embodiment, the twenty-ninth magnet 5123 may be arranged in a direction orthogonal to the magnetic field directions of the twenty-seventh magnet 5121 and the twenty-eighth magnet 5122. For example, the magnetic field of the twenty-ninth magnet 5123 may be directed from the twenty-eighth magnet 5122 toward the twenty-seventh magnet 5121.

In an embodiment, by arranging the twenty-ninth magnet 5123 in a direction orthogonal to the magnetic field directions of the twenty-seventh magnet 5121 and the twenty-eighth magnet 5122, the first AF magnet 512 may reduce magnetic flux leakage and concentrate the magnetic flux toward the first AF coil 513.

FIG. 5B is a view illustrating a second AF actuator 520 according to an embodiment of the disclosure.

In an embodiment, the second AF actuator 520 may be substantially the same as the AF actuator 330.

In an embodiment, the second AF actuator 520 may include a second AF magnet insert yoke 521, a second AF magnet 522, a second AF coil 523, and/or a second AF back yoke 524.

The second AF actuator 520 of FIG. 5B may be described with at least one AF magnet detection sensor omitted.

In an embodiment, the second AF magnet 522 may include at least three magnets. The second AF magnet 522 may include a thirtieth magnet 5221, a thirty-first magnet 5222, and/or a thirty-second magnet 5223. The thirty-second magnet 5223 may be disposed between the thirtieth magnet 5221 and the thirty-first magnet 5222.

In an embodiment, the thirtieth magnet 5221, the thirty-first magnet 5222, and/or the thirty-second magnet 5223 of the second AF magnet 522 may be arranged in a Halbach array.

In an embodiment, the magnetic field of the thirtieth magnet 5221 may be directed from the outside of the second AF magnet 522 (e.g., the AF magnet insert yoke) toward the second AF coil 523 at a third angle θ3. The magnetic field of the thirty-first magnet 5222 may be directed from the second AF coil 523 toward the outside of the second AF magnet 522 (e.g., the AF magnet insert yoke) at a fourth angle θ4.

In an embodiment, the third angle θ3 and the fourth angle θ4 may be the same.

In an embodiment, the thirty-second magnet 5223 may be disposed between the thirtieth magnet 5221 and the thirty-first magnet 5222. For example, the magnetic field of the thirty-second magnet 5223 may be directed from the thirty-first magnet 5222 toward the thirtieth magnet 5221.

In an embodiment, the second AF magnet 522 may reduce magnetic flux leakage and concentrate the magnetic flux toward the second AF coil 523.

FIG. 5C is a view illustrating a third AF actuator 530 according to an embodiment of the disclosure.

In an embodiment, the third AF actuator 530 may be substantially the same as the AF actuator 330.

In an embodiment, the third AF actuator 530 may include a third AF magnet insert yoke 531, a third AF magnet 532, a third AF coil 533, and/or a third AF back yoke 534.

The third AF actuator 530 illustrated in FIG. 5C may be described with at least one AF magnet detection sensor omitted.

In an embodiment, the third AF magnet 532 may include at least three magnets. The third AF magnet 532 may include a thirty-third magnet 5321, a thirty-fourth magnet 5322, and/or a thirty-fifth magnet 5323. The thirty-fifth magnet 5323 may be disposed between the thirty-third magnet 5321 and the thirty-fourth magnet 5322.

In an embodiment, the thirty-third magnet 5321, the thirty-fourth magnet 5322, and/or the thirty-fifth magnet 5323 of the third AF magnet 532 may be arranged in a Halbach array.

In an embodiment, the thirty-third magnet 5321 may at least partially include a slope. The thirty-third magnet 5321 may include the slope formed between a surface facing the third AF magnet insert yoke 531 and a surface facing the third AF coil 533. In thirty-third magnet 5321, the length of the magnet corresponding to the surface facing the third AF magnet insert yoke 531 may be shorter than the length of the magnet corresponding to the surface facing the third AF coil 533.

In an embodiment, the magnetic field of the thirty-third magnet 5321 may be directed from the third AF magnet insert yoke 531 toward the third AF coil 533.

In an embodiment, the thirty-fourth magnet 5322 may at least partially include a slope. The thirty-fourth magnet 5322 may include the slope between a surface facing the third AF magnet insert yoke 531 and a surface facing the third AF coil 533. In the thirty-fourth magnet 5322, the length of the magnet corresponding to the surface facing the third AF magnet insert yoke 531 may be shorter than the length of the magnet corresponding to the surface facing the third AF coil 533.

In an embodiment, the magnetic field of the thirty-fourth magnet 5322 may be directed from the third AF coil 533 toward the third AF magnet insert yoke 531.

In an embodiment, the thirty-fifth magnet 5323 may be disposed between the thirty-third magnet 5321 and the thirty-fourth magnet 5322. For example, the magnetic field of the thirty-fifth magnet 5323 may be directed from the thirty-fourth magnet 5322 toward the thirty-third magnet 5321.

In an embodiment, the thirty-fifth magnet 5323 may at least partially include a slope. The thirty-fifth magnet 5323 may include at least one slope between the surface facing the third AF magnet insert yoke 531 and the surface facing the third AF coil 533. In the thirty-fifth magnet 5323, the length of the magnet corresponding to the surface facing the third AF magnet insert yoke 531 may be longer than the length of the magnet corresponding to the surface facing the third AF coil 533.

In an embodiment, the third AF magnet 532 may reduce magnetic flux leakage and concentrate magnetic flux toward the third AF coil 533.

FIG. 5D is a view illustrating a fourth AF actuator 540 according to an embodiment of the disclosure.

In an embodiment, the fourth AF actuator 540 may be substantially the same as the AF actuator 330.

In an embodiment, the fourth AF actuator 540 may include a fourth AF magnet insert yoke 541, a fourth AF magnet 542, a fourth AF coil 543, and/or a fourth AF back yoke 544.

The fourth AF actuator 540 in FIG. 5D may be described with at least one AF magnet detection sensor omitted.

In an embodiment, the fourth AF magnet 542 may include at least three magnets. The fourth AF magnet 542 may include a thirty-sixth magnet 5421, a thirty-seventh magnet 5422, and/or a thirty-eighth magnet 5423. The thirty-eighth magnet 5423 may be disposed between the thirty-sixth magnet 5421 and the thirty-seventh magnet 5422.

In an embodiment, the thirty-sixth magnet 5421, the thirty-seventh magnet 5422, and/or the thirty-eighth magnet 5423 of the fourth AF magnet 542 may be arranged in a Halbach array.

In an embodiment, the thirty-sixth magnet 5421 may have a stepped shape. The thirty-sixth magnet 5421 may include a step between the surface facing the fourth AF magnet insert yoke 541 and the surface facing the fourth AF coil 543. In the thirty-sixth magnet 5421, the length of the magnet corresponding to the surface facing the fourth AF magnet insert yoke 541 may be shorter than the length of the magnet corresponding to the surface facing the fourth AF coil 543.

In an embodiment, the thirty-seventh magnet 5422 may have a stepped shape. The thirty-seventh magnet 5422 may include a step between a surface facing the fourth AF magnet insert yoke 541 and a surface facing the fourth AF coil 543. In the thirty-seventh magnet 5422, the length of the magnet corresponding to the surface facing the fourth AF magnet insert yoke 541 may be shorter than the length of the magnet corresponding to the surface facing the fourth AF coil 543.

In an embodiment, the thirty-eighth magnet 5423 may have a stepped shape and/or a T shape. The thirty-eighth magnet 5423 may include a step between a surface facing the fourth AF magnet insert yoke 541 and a surface facing the fourth AF coil 543. In the thirty-eighth magnet 5423, the length of the magnet corresponding to a surface facing the fourth AF magnet insert yoke 541 may be longer than the length of the magnet corresponding to a surface facing the fourth AF coil 543.

In an embodiment, the fourth AF magnet 542 may concentrate magnetic flux toward the fourth AF coil 543.

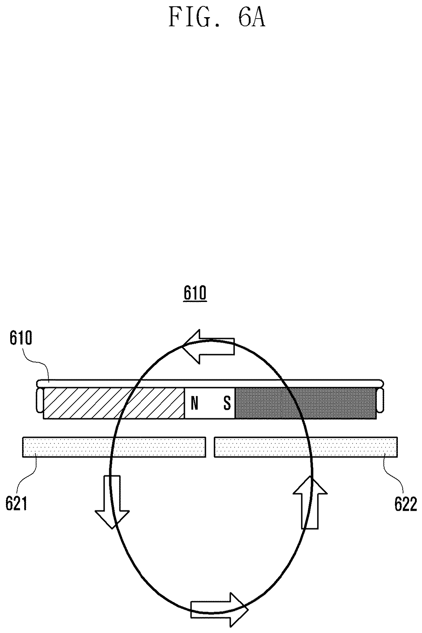

FIG. 6A is a schematic view illustrating a magnetic field of an eighth IS actuator 610 according to an embodiment of the disclosure.

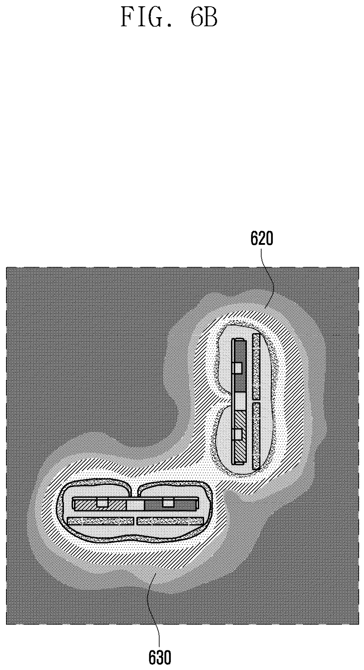

FIG. 6B is a view illustrating a magnetic field distribution when a ninth IS actuator 620 and a tenth IS actuator 630 according to an embodiment of the disclosure are disposed in the camera 300 of FIG. 3.

In an embodiment, the eighth IS actuator 610, the ninth IS actuator 620, and the tenth IS actuator 630 may be substantially the same as the third IS actuator 410 of FIG. 4A.

In an embodiment, the eighth IS actuator 610 may include an eighth IS magnet 610, a fifteenth IS coil 621, and a sixteenth IS coil 622. The eighth IS magnet 610 may be substantially the same as the third IS magnet 412 of FIG. 4A. The fifteenth IS coil 621 may be substantially the same as the fifth IS coil 418 of FIG. 4A. The sixteenth IS coil 622 may be substantially the same as the sixth IS coil 419 of FIG. 4A.

Referring to FIGS. 6A and 6B, it can be seen that the eighth IS actuator 610, the ninth IS actuator 620, and the tenth IS actuator 630 have magnetic fields concentrated in a direction toward the coils (e.g., the fifteenth IS coil 621 and the sixteenth IS coil 622), and that the magnetic fields directed toward the IS back yoke or the IS carrier are reduced. It can also be seen that the eighth IS actuator 610, the ninth IS actuator 620, and the tenth IS actuator 630 have enhanced driving force for moving the IS carrier by concentrating the magnetic fields toward the coils (e.g., the fifteenth IS coil 621 and the sixteenth IS coil 622).

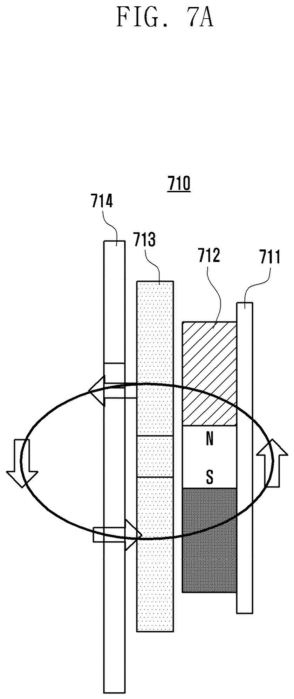

FIG. 7A is a view schematically illustrating a magnetic field of a fifth AF actuator 710 according to an embodiment of the disclosure.

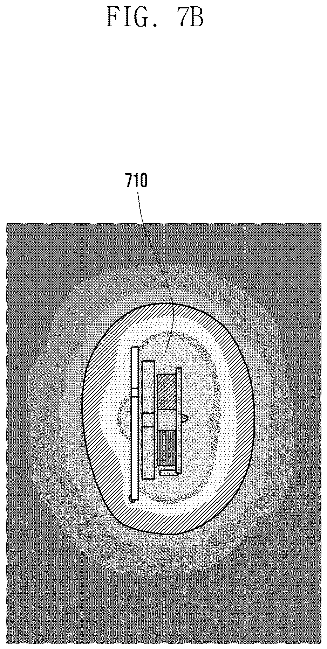

FIG. 7B is a view illustrating a magnetic field distribution when the fifth AF actuator 710 according to an embodiment of the disclosure is disposed in the camera 300 of FIG. 3.

In an embodiment, the fifth AF actuator 710 may be substantially the same as the first AF actuator 510 of FIG. 5A.

In an embodiment, the fifth AF actuator 710 may include a fifth AF magnet insert yoke 711, a fifth AF magnet 712, a fifth AF coil 713, and/or a fifth AF back yoke 714. The fifth AF magnet insert yoke 711 may be substantially the same as the first AF magnet insert yoke 511 of FIG. 5A. The fifth AF magnet 712 may be substantially the same as the first AF magnet 512 of FIG. 5A. The fifth AF coil 713 may be substantially the same as the first AF coil 513 of FIG. 5A. The fifth AF back yoke 714 may be substantially the same as the first AF back yoke 514 of FIG. 5A. The fifth AF magnet 712 may include at least three magnets. A plurality of magnets of the fifth AF magnet 712 may be arranged in a Halbach array.

Referring to FIGS. 7A and 7B, it can be seen that the fifth AF actuator 710 has a magnetic field concentrated in a direction toward the fifth AF coil 713 and that the magnetic field directed toward the AF carrier is reduced. It can also be seen that the fifth AF actuator 710 has enhanced driving force for moving the AF carrier by concentrating the magnetic field toward the fifth AF coil 713.

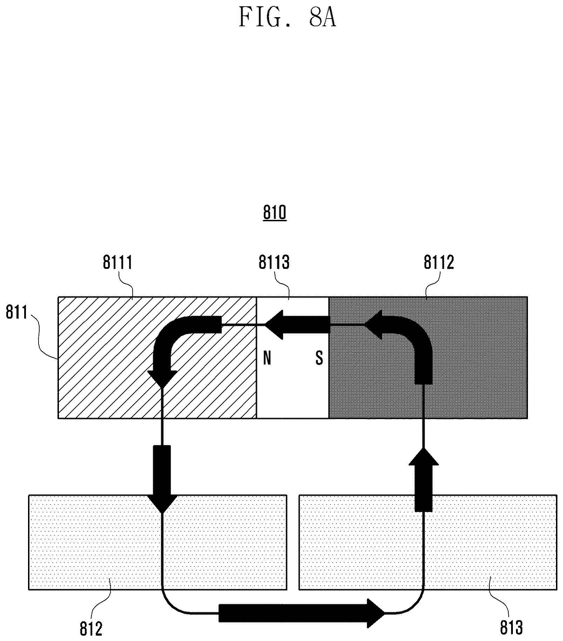

FIG. 8A is a view illustrating a range in which a magnet 8113 having a magnetic field substantially parallel to the direction of the coils is disposed in an eleventh IS actuator 810 according to an embodiment of the disclosure.

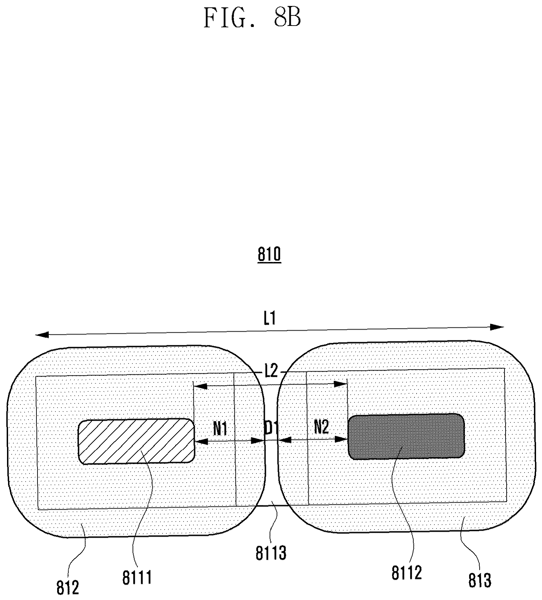

FIG. 8B is a view illustrating a range in which the magnet 8113 having a magnetic field substantially parallel to the direction of the coils is disposed in the eleventh IS actuator 810 according to an embodiment of the disclosure.

In an embodiment, the eleventh IS actuator 810 may be substantially the same as the third IS actuator 410 of FIG. 4A.

In an embodiment, the eleventh IS actuator 810 may include a ninth IS magnet 811, a seventeenth IS coil 812, and an eighteenth IS coil 813. The ninth IS magnet 811 may be substantially the same as the third IS magnet 412 of FIG. 4A. The seventeenth IS coil 812 may be the same as the fifth IS coil 418 of FIG. 4A. The eighteenth IS coil 813 may be the same as the sixth IS coil 419 of FIG. 4A.

In an embodiment, the ninth IS magnet 811 may include at least three magnets.

In an embodiment, the ninth IS magnet 811 may include a thirty-ninth magnet 8111, a fortieth magnet 8112, and/or a forty-first magnet 8113.

In an embodiment, the thirty-ninth magnet 8111, the fortieth magnet 8112, and/or the forty-first magnet 8113 of the ninth IS magnet 811 may be arranged in a Halbach array.

In an embodiment, the magnetic field of the thirty-ninth magnet 8111 may be directed from the IS back yoke toward the seventeenth IS coil 812. The magnetic field of the fortieth magnet 8112 may be directed from the eighteenth IS coil 813 toward the IS back yoke.

In an embodiment, the forty-first magnet 8113 may be arranged in a direction that may be orthogonal to the direction of the magnetic fields of the thirty-ninth magnet 8111 and the fortieth magnet 8112. For example, the magnetic field of the forty-first magnet 8113 may be directed from the fortieth magnet 8112 toward the thirty-ninth magnet 8111.

In an embodiment, the ninth IS magnet 811 may have a first length L1.

In an embodiment, the seventeenth IS coil 812 and the eighteenth IS coil 813 may be spaced apart by a predetermined distance D1, which may vary depending on the design.

In an embodiment, the seventeenth IS coil 812 may have a first predetermined length N1 as a length between an inner diameter and an outer diameter or a width of the coil. The first predetermined length N1 may vary depending on the design.

In an embodiment, the eighteenth IS coil 813 may have a second predetermined length N2 as a length between an inner diameter and an outer diameter, or a width of the coil. The second predetermined length N2 may vary depending on the design. The first predetermined length N1 and the second predetermined length N2 may be the same. However, the disclosure is not limited thereto, and the first predetermined length N1 and the second predetermined length N2 may differ from each other.

In an embodiment, a total length of the first predetermined length N1, the second predetermined length N2, and the predetermined distance D1 may be a second length L2.

In an embodiment, the forty-first magnet 8113 may have a size that is greater than 0 and less than or equal to the second length L2.

Referring to FIGS. 4A, 8A, and 8B, the twelfth magnet 4123 may have a size that is greater than 0 and less than or equal to the second length L2. The second length L2 may be a sum of the distance between the fifth IS coil 418 and the sixth IS coil 419 and the widths between the inner and outer diameters of the respective fifth and sixth IS coils 418 and 419.

Referring to FIGS. 4B, 8A, and 8B, the fifteenth magnet 4223 may have a size that is greater than 0 and less than or equal to the second length L2. The second length L2 may be a sum of the distance between the seventh IS coil 428 and the eighth IS coil 429 and the widths between the inner and outer diameters of the respective seventh and eighth IS coils 428 and 429.

Referring to FIGS. 4C, 8A, and 8B, the eighteenth magnet 4323 may have a size that is greater than 0 and less than or equal to the second length L2. The second length L2 may be a sum of the distance between the ninth IS coil 438 and the tenth IS coil 439 and the widths between the inner and outer diameters of the respective ninth and tenth IS coils 438 and 439.

Referring to FIGS. 4E, 8A, and 8B, the twenty-fifth magnet 4522 may have a size that is greater than 0 and less than or equal to the second length L2. The second length L2 may be a sum of the distance between the thirteenth IS coil 458 and the fourteenth IS coil 459 and the widths between the inner and outer diameters of the respective thirteenth and fourteenth IS coils 458 and 459.

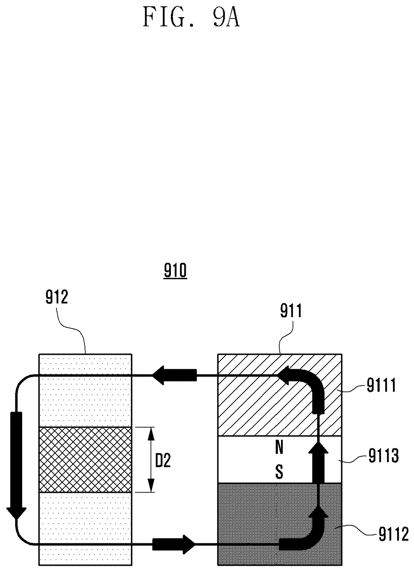

FIG. 9A is a view illustrating a range in which a magnet 9113 having a magnetic field substantially parallel to the direction of the AF coil is disposed in a sixth AF actuator 910 according to an embodiment of the disclosure.

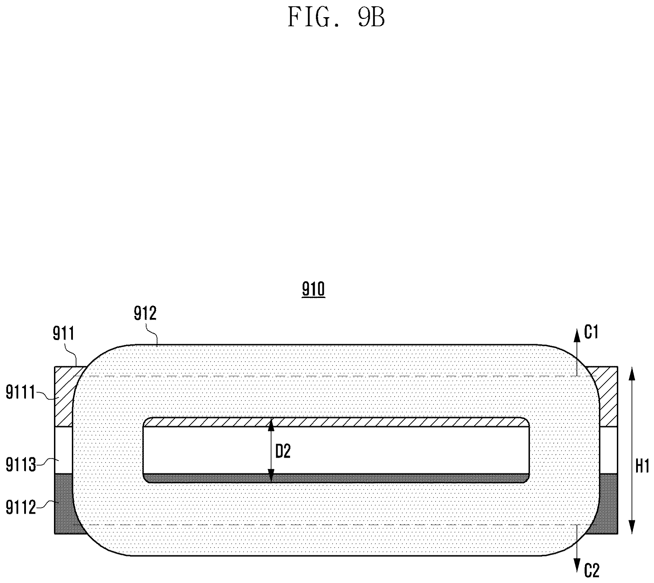

FIG. 9B is a view illustrating a range in which the magnet 9113 having a magnetic field substantially parallel to the direction of the AF coils is disposed in the sixth AF actuator 910 according to an embodiment of the disclosure.

In an embodiment, the sixth AF actuator 910 may be substantially the same as the first AF actuator 510 of FIG. 5A.

In an embodiment, the sixth AF magnet 911 may include three or more magnets. The sixth AF magnet 911 may include a forty-second magnet 9111, a forty-third magnet 9112, and/or a forty-fourth magnet 9113. The forty-fourth magnet 9113 may be disposed between the forty-second magnet 9111 and the forty-third magnet 9112.

In an embodiment, the forty-second magnet 9111, the forty-third magnet 9112, and/or the forty-fourth magnet 9113 of the sixth AF magnet 911 may be arranged in a Halbach array.

In an embodiment, a magnetic field direction of the forty-second magnet 9111 may be oriented from the AF magnet insert yoke toward the sixth AF coil 912.

In an embodiment, a magnetic field direction of the forty-third magnet 9112 may be oriented from the sixth AF coil 912 toward the AF magnet insert yoke.

In an embodiment, the forty-fourth magnet 9113 may be arranged in a direction that may be orthogonal to the directions of the magnetic fields of the forty-second magnet 9111 and the forty-third magnet 9112. For example, the magnetic field of the forty-fourth magnet 9113 may be directed from the forty-third magnet 9112 toward the forty-third magnet 9112.

In an embodiment, the sixth AF magnet 911 may have a first height H1.

In an embodiment, the sixth AF coil 912 may include a stretched portion and a rounded portion. Referring to FIG. 9B, in the sixth AF coil 912, a stretched portion may refer to a portion in which the first line C1 or the second line C2 is drawn, and a rounded portion may refer to a portion excluding the stretched portion.

If a center of a first stretched portion of the sixth AF coil 912 is the first line C1 and a center of a second stretched portion is the second line C2, the forty-fourth magnet 9113 may have a size that is greater than 0 and less than or equal to a distance D2 between the center of the first stretched portion and the center of the second stretched portion. The center of the first stretched portion and the center of the second stretched portion may refer to centers of the respective stretched portions belonging to the longitudinal direction (or long direction) among the longitudinal direction and the vertical direction (or short direction) of the AF coil.

Referring to FIGS. 5A, 9A, and 9B, the twenty-ninth magnet 5123 may have a size that is greater than 0 and less than or equal to a distance between the center of the first stretched portion and the center of the second stretched portion of the first AF coil 513.

Referring to FIGS. 5B, 9A, and 9B, the thirty-second magnet 5223 may have a size that is greater than 0 and less than or equal to a distance between the center of the first stretched portion and the center of the second stretched portion of the second AF magnet 523.

Referring to FIGS. 5C, 9A, and 9B, the thirty-fifth magnet 5323 may have a size that is greater than 0 and less than or equal to a distance between the center of the first stretched portion and the center of the second stretched portion of the third AF coil 533.

Referring to FIGS. 5D, 9A, and 9B, the thirty-eighth magnet 5423 may have a size that is greater than 0 and less than or equal to a distance between the center of the first stretched portion and the center of the second stretched portion of the fourth AF coil 543.

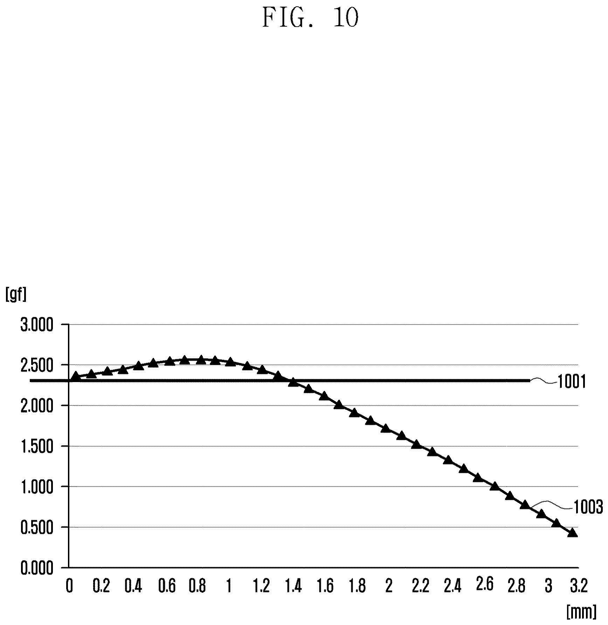

FIG. 10 illustrates a graph 1003 representing the driving force according to the size of the twelfth magnet 4123 of the third IS actuator 410 according to an embodiment of the disclosure, and a graph 1001 representing the driving force of a typical camera IS actuator.

In an embodiment, the twelfth magnet 4123 of the third IS actuator 410 may have a size that is greater than 0 and less than or equal to the second length L2. The second length L2 may be a sum of the distance between the fifth IS coil 418 and the sixth IS coil 419 and the widths between the inner and outer diameters of the respective fifth and sixth IS coils 418 and 419.

The horizontal axis of FIG. 10 represents the size of the twelfth magnet 4123 (unit: mm), and the vertical axis represents the magnitude of force (unit: gf) generated by the third IS actuator 410.

In an embodiment, it can be seen that, when the size of the twelfth magnet 4123 is greater than 0 and less than or equal to the second length L2, the magnitude of force generated by the third IS actuator 410 is improved compared to the IS actuator that does not include a Halbach array. For example, the twelfth magnet 4123 may have a size that is greater than 0 mm and may fall within a range of less than approximately 2.39 mm.

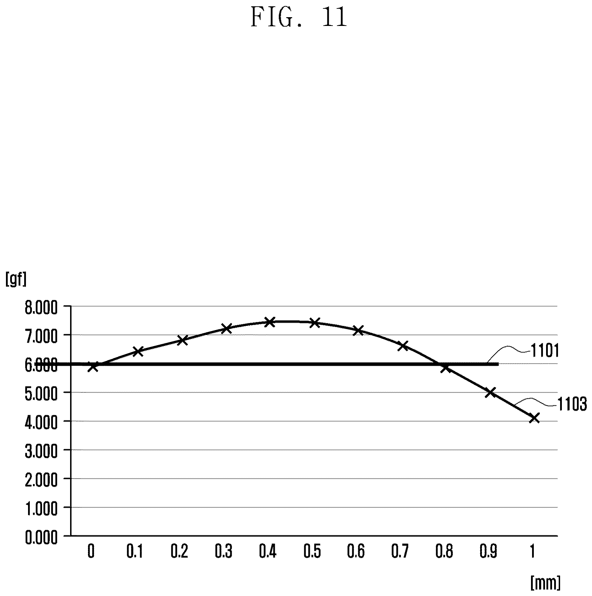

FIG. 11 illustrates a graph 1103 representing the driving force according to the size of the twenty-ninth magnet 5123 of the first AF actuator 510 according to an embodiment of the disclosure, and a graph 1101 representing the driving force of a typical camera AF actuator.

In an embodiment, the twenty-ninth magnet 5123 of the first AF actuator 510 may have a size that is greater than 0 and less than or equal to the distance between the center of a first stretched portion and the center of a second stretched portion of a first AF coil 513.

The horizontal axis of FIG. 11 represents the size of the twenty-ninth magnet 5123 (unit: mm), and the vertical axis represents the magnitude of force (unit: gf) generated by the first AF actuator 510.

In an embodiment, it can be seen that, when the twenty-ninth magnet 5123 has a size that is greater than 0 and less than or equal to the distance between the center of the first stretched portion and the center of the second stretched portion of the first AF coil 513, the magnitude of force generated by the first AF actuator 510 is improved compared to an AF actuator that does not include a Halbach array. For example, the twenty-ninth magnet 5123 may have a size that is greater than 0 mm and less than or equal to about 1.71 mm.

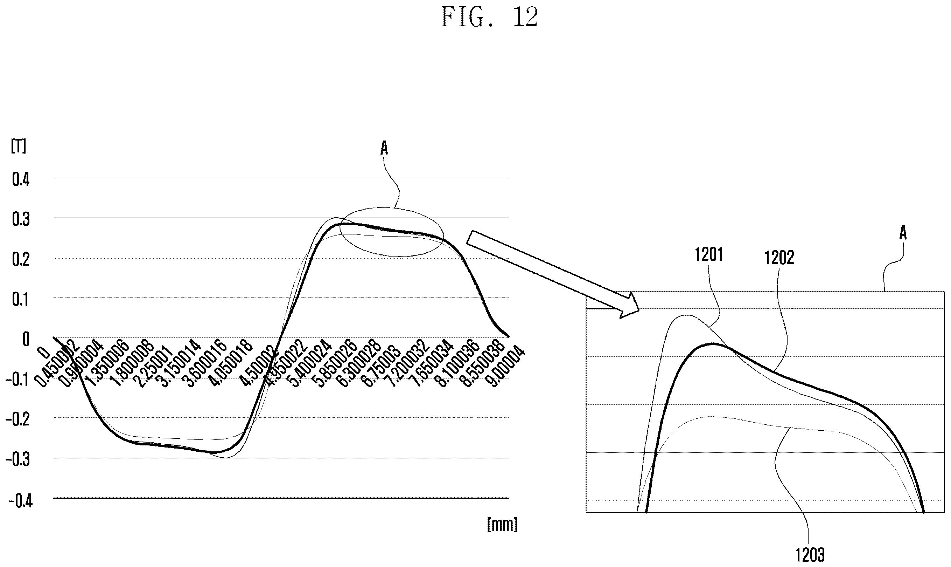

FIG. 12 illustrates a graph 1201 representing the magnetic force density of the third IS actuator 410 according to an embodiment of the disclosure, a graph 1202 representing the magnetic force density of the fifth IS actuator 430, and a graph 1203 representing the magnetic force density of a typical camera IS actuator.

Referring to the enlarged region A, it can be seen that the magnetic flux in the concentrated region of the magnetic force density of the third IS actuator 410 and the magnetic force density of the fifth IS actuator 430 are improved compared to that of the typical camera IS actuator.

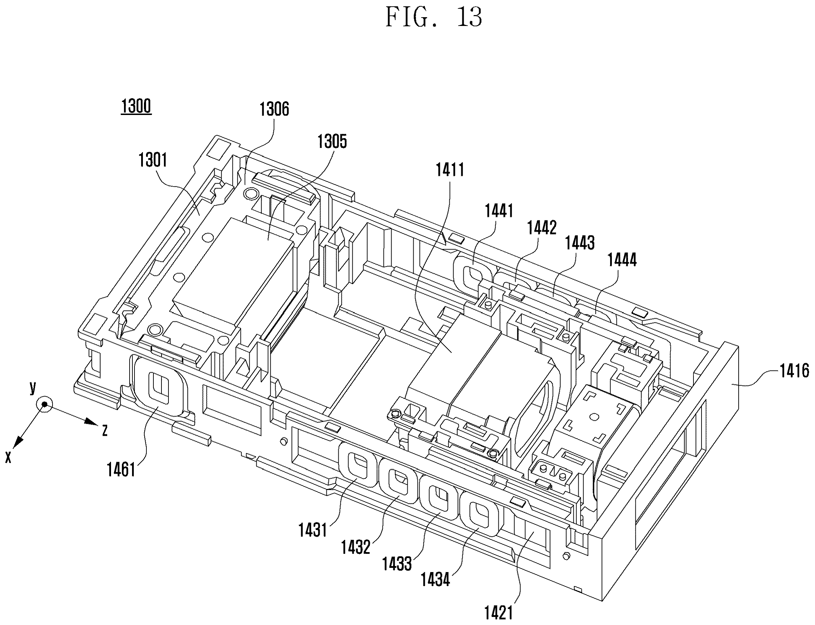

FIG. 13 is a perspective view illustrating a camera 1300 according to an embodiment of the disclosure.

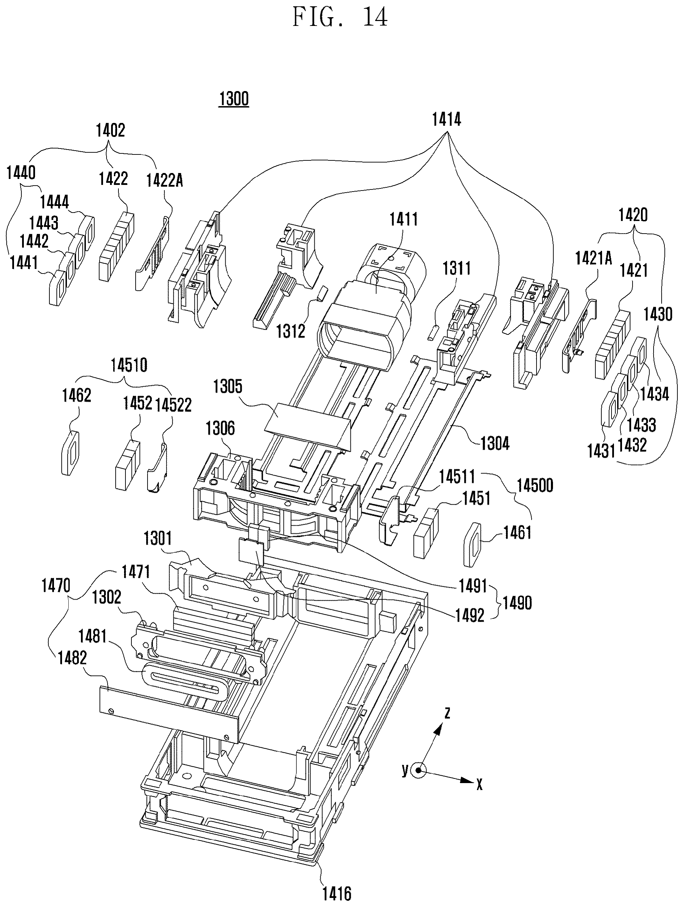

FIG. 14 is an exploded perspective view of the camera 1300 of FIG. 13.

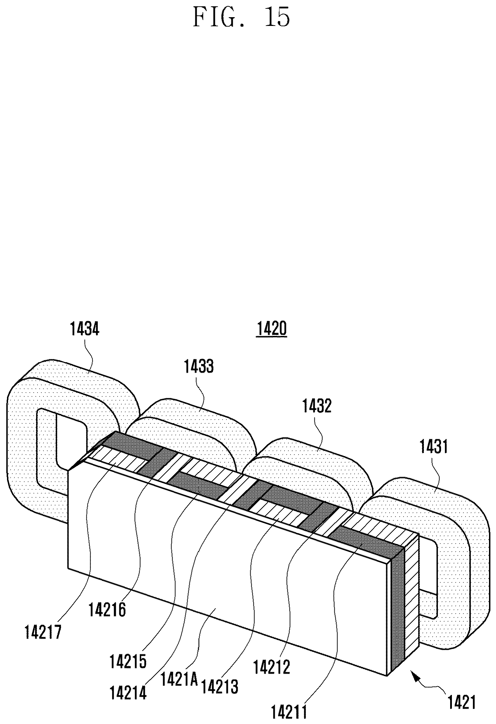

FIG. 15 is a view illustrating a first long-stroke AF actuator 1420.

Referring to FIGS. 13, 14, and 15, the camera 1300 may include a middle guide 1301, a ball guide 1302, a housing insert yoke 1304, a first prism 1305, a prism carrier 1306, a plurality of suction magnets 1311 and 1312, a lens barrel 1411, an AF carrier 1414, a camera housing 1416, a first long-stroke AF actuator 1420, a second long-stroke AF actuator 1402, a first rotation actuator 14500, a second rotation actuator 14510, a first axis-moving actuator 1470, and a central connection structure 1490.

In an embodiment, the camera 1300 may adjust focus by controlling the first long-stroke AF actuator 1420 and the second long-stroke AF actuator 1402 under the control of the processor 120. The camera 1300 may correct shaking by controlling the first rotation actuator 14500, the second rotation actuator 14510, and/or the first axis-moving actuator 1470 under the control of the processor 120.

In an embodiment, the middle guide 1301 may prevent the prism carrier 1306 from moving in directions other than the first axis direction (e.g., the y-axis) or the second axis direction (e.g., the x-axis) when the prism carrier 1306 moves along the first axis or the second axis.

In an embodiment, the ball guide 1302 may be at least partially coupled to a ball and/or ball bearing. When the first axis-moving actuator 1470 moves in the first axis direction (e.g., the y-axis), the ball and/or ball bearing coupled to the ball guide 1302 may guide the movement of the first axis-moving actuator 1470.

In an embodiment, the prism carrier 1306 may include, at least in part, the first prism 1305. The first prism 1305 may be a reflective member that reflects light received through the lens barrel 1411 toward an image sensor (not illustrated).

In an embodiment, the prism carrier 1306 may be at least partially coupled to a ball and/or ball bearing. The ball and/or ball bearing coupled to the prism carrier 1306 may guide the movement of the prism carrier 1306.

In an embodiment, the plurality of suction magnets 1311 and 1312 may prevent the AF carrier 1414 from being separated by magnetic force.

In an embodiment, the camera housing 1416 may prevent and protect the prism carrier 1306, the lens barrel 1411, and the AF carrier 1414 from being separated due to movement.

In an embodiment, the housing insert yoke 1304 may enhance or supplement the hardness of the camera housing 1416.

In an embodiment, the lens barrel 1411 may have at least one or more lenses assembled in alignment.

In an embodiment, the AF carrier 1414 may be moved together with the lens barrel 1411 by the first long-stroke AF actuator 1420 and the second long-stroke AF actuator 1402.

In an embodiment, the first long-stroke AF actuator 1420 may include a first yoke 1421A, a sixth AF magnet 1421, and a first coil rail 1430. The first yoke 1421A may adjust the direction of the magnetic flux of the sixth AF magnet 1421. The sixth AF magnet 1421 may include at least seven magnets. The first coil rail 1430 may include a plurality of coils. The first coil rail 1430 may include a first coil 1431, a second coil 1432, a third coil 1433, and/or a fourth coil 1434.

In an embodiment, the second long-stroke AF actuator 1402 may include a second yoke 1422A, a seventh AF magnet 1422, and a second coil rail 1440. The second yoke 1422A may adjust the direction of the magnetic flux of the seventh AF magnet 1422. The seventh AF magnet 1422 may include at least seven magnets. The second coil rail 1440 may include a plurality of coils. The second coil rail 1440 may include a fifth coil 1441, a sixth coil 1442, a seventh coil 1443, and/or an eighth coil 1444.

Referring to FIGS. 13, 14, and 15, the first long-stroke AF actuator 1420 may include a first yoke 1421A, a sixth AF magnet 1421, and a first coil rail 1430.

In an embodiment, the sixth AF magnet 1421 may include a forty-fifth magnet 14211, a forty-sixth magnet 14212, a forty-seventh magnet 14213, a forty-eighth magnet 14214, a forty-ninth magnet 14215, a fiftieth magnet 14216, and/or a fifty-first magnet 14217.

In an embodiment, the forty-fifth magnet 14211, the forty-sixth magnet 14212, the forty-seventh magnet 14213, the forty-eighth magnet 14214, the forty-ninth magnet 14215, the fiftieth magnet 14216, and/or the fifty-first magnet 14217 of the sixth AF magnet 1421 may be arranged in a Halbach array.

In an embodiment, the magnetic field of the forty-fifth magnet 14211 may be directed from the first yoke 1421A toward the first coil rail 1430.

In an embodiment, the forty-sixth magnet 14212 may be arranged in a direction that may be orthogonal to the directions of the magnetic fields of the forty-fifth magnet 14211 and the forty-seventh magnet 14213. For example, the magnetic field of the forty-sixth magnet 14212 may be directed from the forty-seventh magnet 14213 toward the forty-fifth magnet 14211.

In an embodiment, the magnetic field of the forty-seventh magnet 14213 may be directed from the first coil rail 1430 toward the first yoke 1421A.

In an embodiment, the forty-eighth magnet 14214 may be arranged in a direction that may be orthogonal to the directions of the magnetic fields of the forty-seventh magnet 14213 and the forty-ninth magnet 14215. For example, the magnetic field of the forty-eighth magnet 14214 may be directed from the forty-seventh magnet 14213 toward the forty-ninth magnet 14215.

In an embodiment, the magnetic field of the forty-ninth magnet 14215 may be directed from the first yoke 1421A toward the first coil rail 1430.

In an embodiment, the fiftieth magnet 14216 may be arranged in a direction that may be orthogonal to the directions of the magnetic fields of the forty-ninth magnet 14215 and the fifty-first magnet 14217. For example, the magnetic field of the fiftieth magnet 14216 may be directed from the fifty-first magnet 14217 toward the forty-ninth magnet 14215.

In an embodiment, the magnetic field of the fifty-first magnet 14217 may be directed from the first coil rail 1430 toward the first yoke 1421A.

In an embodiment, the sixth AF magnet 1421 may reduce magnetic flux leakage directed toward the first yoke 1421A and may concentrate magnetic flux toward the first coil rail 1430.

Referring to FIG. 15, a description is given with a focus on the first long-stroke AF actuator 1420, but a second long-stroke AF actuator 1402 may have the same configuration and operation as the first long-stroke AF actuator 1420.

In an embodiment, the prism carrier 1306 may rotate left or right about the center of the prism carrier 1306 by the first rotation actuator 14500 and/or the second rotation actuator 14510.

In an embodiment, the prism carrier 1306 may rotate left or right about the center of the prism carrier 1306 (e.g., a center connecting structure 1490) by the first rotation actuator 14500 and/or the second rotation actuator 14510.

In an embodiment, the first rotation actuator 14500 may include a third yoke 14511, a first prism magnet 1451, and a ninth coil 1461. The first prism magnet 1451 may include at least three magnets, and the at least three magnets may be arranged in a Halbach array. For example, the first prism magnet 1451 may include a first-type magnet having a magnetic field directed toward the ninth coil 1461, a second-type magnet having a magnetic field directed from the ninth coil 1461 toward the third yoke 14511, and a third-type magnet. The third-type magnet may be disposed between the first-type magnet and the second-type magnet, and the magnetic field of the third-type magnet may be directed from the first-type magnet toward the second-type magnet or from the second-type magnet toward the first-type magnet. The third-type magnet may have a size that is greater than zero and is equal to or less than a distance between a center of a first stretched portion and a center of a second stretched portion of the ninth coil 1461.

In an embodiment, the second rotation actuator 14510 may include a fourth yoke 14522, a second prism magnet 1452, and a tenth coil 1462. The second prism magnet 1452 may include at least three magnets, and the at least three magnets may be arranged in a Halbach array. For example, the second prism magnet 1452 may include a first-type magnet having a magnetic field directed toward the tenth coil 1462, a second-type magnet having a magnetic field directed from the tenth coil 1462 toward the fourth yoke 14522, and a third-type magnet. The third-type magnet may be disposed between the first-type magnet and the second-type magnet, and the magnetic field of the third-type magnet may be directed from the first-type magnet toward the second-type magnet or from the second-type magnet toward the first-type magnet. The third-type magnet may have a size that is greater than zero and is equal to or less than a distance between a center of a first stretched portion and a center of a second stretched portion of the tenth coil 1462.

In an embodiment, the prism carrier 1306 may be rotated by the first axis-moving actuator 1470.

In an embodiment, the first axis-moving actuator 1470 may include a fifth yoke 1482, a third prism magnet 1471, and an eleventh coil 1481. The third prism magnet 1471 may include at least three magnets, and the at least three magnets may be arranged in a Halbach array. For example, the third prism magnet 1471 may include a first-type magnet having a magnetic field directed toward the eleventh coil 1481, a second-type magnet having a magnetic field directed from the eleventh coil 1481 toward the fifth yoke 1482, and a third-type magnet. The third-type magnet may be disposed between the first-type magnet and the second-type magnet, and the magnetic field of the third-type magnet may be directed from the first-type magnet toward the second-type magnet or from the second-type magnet toward the first-type magnet. The third-type magnet may have a size that is greater than zero and equal to or less than a distance between a center of a first stretched portion and a center of a second stretched portion of the eleventh coil 1481.

In an embodiment, the center connecting structure 1490 may include a connecting magnet 1491 and a connecting yoke 1492. The center connecting structure 1490 may connect the prism carrier 1306 and the middle guide 1301 using magnetic force of the connecting magnet 1491 and the connecting yoke 1492.

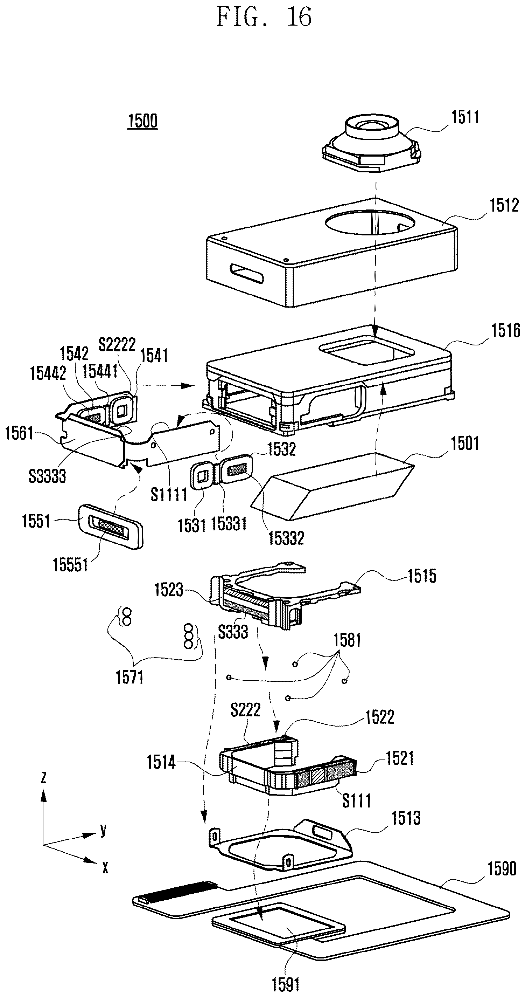

FIG. 16 is an exploded view of a camera 1500 according to an embodiment of the disclosure.

In an embodiment, the camera 1500 may include a lens assembly 1511, a shield can 1512, a stopper 1513, an IS carrier 1514, an AF carrier 1515, a camera housing 1516, a tenth IS magnet 1521, an eleventh IS magnet 1522, an eighth AF magnet 1523, a nineteenth IS coil 1531, a twentieth IS coil 1532, a twenty-first IS coil 1541, a twenty-second IS coil 1542, a seventh AF coil 1551, a first magnet detection sensor 15331, a second magnet detection sensor 15332, a third magnet detection sensor 15441, a fourth magnet detection sensor 15442, a fifth magnet detection sensor 15551, an FPCB 1561, a plurality of AF balls 1571, a plurality of IS balls 1581, and a printed circuit board (PCB) 1590 including an image sensor 1591.

In an embodiment, the second prism 1501 may include a reflective member having at least one reflective surface. The second prism 1501 may include a single prism or a plurality of prisms, and may be positioned between the lens assembly 1511 and the image sensor 1591 so as to define an optical path in which light that has passed through the lens assembly 1511 is oriented toward the image sensor 1591.

In an embodiment, at least a portion of the second PCB 1590 may be made of a flexible circuit so as to allow for the movement of the image sensor 1591, which is coupled with and moved together with the IS carrier 1514 and/or the AF carrier 1515.

In an embodiment, the lens assembly 1511 may include at least one lens aligned and assembled.

In an embodiment, the shield can 1512 may be positioned at the outermost perimeter of the camera 1500 and may surround the stopper 1513, the IS carrier 1514, the AF carrier 1515, and the camera housing 1516. The shield can 1512 may reduce or block electromagnetic waves generated externally, so as to reduce the occurrence of malfunctions of the camera 1500.

In an embodiment, the camera housing 1516 may be located inside the shield can 1512. The camera housing 1516 may be coupled or fitted into the shield can 1512.

In an embodiment, the stopper 1513 may be coupled or fitted to the AF carrier 1515. The stopper 1513 may prevent the IS carrier 1514 from being separated from the camera housing 1516. The stopper 1513 may include an opening corresponding to the image sensor 1591.

In an embodiment, the IS carrier 1514 may include a tenth IS magnet 1521 and an eleventh IS magnet 1522 symmetrically about the first axis (e.g., the y-axis). The tenth IS magnet 1521 and the eleventh IS magnet 1522 may be disposed on opposite sides of the IS carrier 1514.

In an embodiment, at least a portion of a side surface of each of the IS carrier 1514 and the AF carrier 1515 may be opened to accommodate the second prism 1501.

In an embodiment, the tenth IS magnet 1521 may include at least three magnets, which may be arranged in a Halbach array. The eleventh IS magnet 1522 may include at least three magnets, which may be arranged in a Halbach array.

In an embodiment, the tenth IS magnet 1521 may be disposed on a first side surface S111 of the IS carrier 1514, and the eleventh IS magnet 1522 may be disposed on a second side surface S222 of the IS carrier 1514.

In an embodiment, the plurality of IS balls 1581 may guide the movement of the IS carrier 1514 when the IS carrier 1514 moves by electromagnetic force between magnets (e.g., the tenth IS magnet 1521 and the eleventh IS magnet 1522) and coils (e.g., the nineteenth IS coil 1531, the twentieth IS coil 1532, the twenty-first IS coil 1541, and the twenty-second IS coil 1542).

In an embodiment, the lens assembly 1511 and/or the second prism 1501 disposed in the camera housing 1516 may remain stationary, and the IS carrier 1514 coupled to the image sensor 1591 and/or the AF carrier 1515 may move based on the plurality of AF balls 1571 disposed between the camera housing 1516 and the AF carrier 1515.

In an embodiment, the eighth AF magnet 1523 may be disposed in at least a portion of the AF carrier 1515. The eighth AF magnet 1523 may be disposed on a third side surface S333 of the AF carrier 1515. The third side surface S333 of the AF carrier 1515 may be located in a direction that is substantially orthogonal to the first side surface S111 and/or the second side surface S222 of the IS carrier 1514.

In an embodiment, the eighth AF magnet 1523 may include at least three magnets, and the at least three magnets of the eighth AF magnet 1523 may be arranged in a Halbach array.

In an embodiment, the FPCB 1561 may include a nineteenth IS coil 1531, a twentieth IS coil 1532, a first magnet detection sensor 15331, and a second magnet detection sensor 15332 on a fourth side surface S1111 corresponding to an area in which the tenth IS magnet 1521 is disposed.

In an embodiment, the FPCB 1561 may include a twenty-first IS coil 1541, a twenty-second IS coil 1542, a third magnet detection sensor 15441, and a fourth magnet detection sensor 15442 on a fifth side surface S2222 corresponding to an area in which the eleventh IS magnet 1522 is disposed.

In an embodiment, the FPCB 1561 may include a seventh AF coil 1551 and a fifth magnet detection sensor 15551 on a sixth side surface S3333 corresponding to an area in which the eighth AF magnet 1523 is disposed.

In an embodiment, the first magnet detection sensor 15331 may be disposed between the nineteenth IS coil 1531 and the twentieth IS coil 1532. The first magnet detection sensor 15331 may detect a position of the tenth IS magnet 1521. For example, the first magnet detection sensor 15331 may detect a position of the tenth IS magnet 1521 in the y-axis direction.

In an embodiment, the second magnet detection sensor 15332 may be disposed in a hole or at a center of the twentieth IS coil 1532. The second magnet detection sensor 15332 may detect a distance between the twentieth IS coil 1532 and the tenth IS magnet 1521.

In an embodiment, the third magnet detection sensor 15441 may be disposed between the twenty-first IS coil 1541 and the twenty-second IS coil 1542.

In an embodiment, the third magnet detection sensor 15441 may detect a position of the eleventh IS magnet 1522. For example, the third magnet detection sensor 15441 may detect a position of the eleventh IS magnet 1522 in the y-axis direction.

In an embodiment, the fourth magnet detection sensor 15442 may be disposed in a hole or at a center of the twenty-second IS coil 1542. The fourth magnet detection sensor 15442 may detect a distance between the twenty-second IS coil 1542 and the eleventh IS magnet 1522.

In an embodiment, the fifth magnet detection sensor 15551 may be disposed in a hole of the seventh AF coil 1551.

In an embodiment, the fifth magnet detection sensor 15551 may detect a position of the eighth AF magnet 1523.

In an embodiment, an electronic device 101 includes a camera (e.g., the camera 300 of FIG. 3, the camera 1300 of FIG. 13, or the camera 1500 of FIG. 16). the camera (e.g., the camera 300 of FIG. 3, the camera 1300 of FIG. 13, or the camera 1500 of FIG. 16) may include a first carrier (e.g., an IS carrier 314 or an AF carrier 318) configured to be movable by electromagnetic force, and a first actuator (e.g., an AF actuator 330, a first IS actuator 340, or a second IS actuator 350) including a first magnet (e.g., an AF magnet 332, a first IS magnet 342, or a second IS magnet 352) and a first coil (e.g., an AF coil 333, a first IS coil 344, a second IS coil 345, a third IS coil 354, or a fourth IS coil 355) configured to move the first carrier (e.g., the IS carrier 314 or the AF carrier 318).

In an embodiment, the first magnet (e.g., the AF magnet 332, the first IS magnet 342, or the second IS magnet 352) may include a first-type magnet having a magnetic field directed from the outside of the first magnet (e.g., the AF magnet 332, the first IS magnet 342, or the second IS magnet 352) toward the first coil (e.g., the AF coil 333, the first IS coil 344, the second IS coil 345, the third IS coil 354, or the fourth IS coil 355), a second-type magnet having a magnetic field directed from the first coil (e.g., the AF coil 333, the first IS coil 344, the second IS coil 345, the third IS coil 354, or the fourth IS coil 355) toward the outside of the first magnet (e.g., the AF magnet 332, the first IS magnet 342, or the second IS magnet 352), and a third-type magnet disposed between the first-type magnet and the second-type magnet and having a magnetic field flowing from the second-type magnet to the first-type magnet.

In an embodiment, the third-type magnet may have a size that is less than or equal to a distance between a center of a first stretched portion of the first coil (e.g., the AF coil 333, the first IS coil 344, the second IS coil 345, the third IS coil 354, or the fourth IS coil 355) and a center of a second stretched portion of the first coil (e.g., the AF coil 333, the first IS coil 344, the second IS coil 345, the third IS coil 354, or the fourth IS coil 355).

In an embodiment, the first coil (e.g., the AF coil 333, the first IS coil 344, the second IS coil 345, the third IS coil 354, or the fourth IS coil 355) may have a first predetermined length as a length between an inner diameter and an outer diameter or as a width of the coil.

In an embodiment, the first actuator (e.g., the AF actuator 330, the first IS actuator 340, or the second IS actuator 350) may further include a second coil (e.g., the first IS coil 344 or the second IS coil 345), which is spaced apart from the first coil (e.g., the AF coil 333, the first IS coil 344, the second IS coil 345, the third IS coil 354, or the fourth IS coil 355) by a predetermined distance, and which has a second predetermined length as a length between an inner diameter and an outer diameter or as a width of the coil.

In an embodiment, the sum of the first predetermined length, the second predetermined length, and the predetermined distance may be a first length.

In an embodiment, the third-type magnet may have a size less than or equal to the first length.

In an embodiment, the first-type magnet may have an inclined surface between a surface facing outside of the first-type magnet and a surface facing the first coil (e.g., the AF coil 333, the first IS coil 344, the second IS coil 345, the third IS coil 354, or the fourth IS coil 355), and a length of the magnet corresponding to the surface facing outside of the first-type magnet is shorter than a length of the magnet corresponding to the surface facing the first coil (e.g., the AF coil 333, the first IS coil 344, the second IS coil 345, the third IS coil 354, or the fourth IS coil 355).

In an embodiment, the second-type magnet may have an inclined surface between a surface facing outside of the second-type magnet and a surface facing a first coil (e.g., the AF coil 333, the first IS coil 344, the second IS coil 345, the third IS coil 354, or the fourth IS coil 355), and a length of the magnet corresponding to the surface facing outside of the second-type magnet is shorter than a length of the magnet corresponding to the surface facing the second coil (e.g., the first IS coil 344 or the second IS coil 345).

In an embodiment, the third-type magnet may have an inclined surface between a surface facing outside of the third-type magnet and a surface facing the first coil (e.g., the AF coil 333, the first IS coil 344, the second IS coil 345, the third IS coil 354, or the fourth IS coil 355), and a length of the magnet corresponding to the surface facing outside of the third-type magnet is longer than a length of the magnet corresponding to the surface facing the first coil (e.g., the AF coil 333, the first IS coil 344, the second IS coil 345, the third IS coil 354, or the fourth IS coil 355).

In an embodiment, the first-type magnet may be configured to generate a magnetic field at a first predetermined angle from the outside of the first magnet (e.g., the AF magnet 332, the first IS magnet 342, or the second IS magnet 352) toward a plurality of first IS coils.

In an embodiment, the second-type magnet may generate a magnetic field at a second predetermined angle from the first coil (e.g., the AF coil 333, the first IS coil 344, the second IS coil 345, the third IS coil 354, or the fourth IS coil 355) toward outside of the first magnet (e.g., the AF magnet 332, the first IS magnet 342, or the second IS magnet 352).

In an embodiment, the first-type magnet may have a step between a surface facing outside of a first magnet (e.g., the AF magnet 332, the first IS magnet 342, or the second IS magnet 352) and a surface facing a first coil (e.g., the AF coil 333, the first IS coil 344, the second IS coil 345, the third IS coil 354, or the fourth IS coil 355), and a length of the magnet corresponding to the surface facing outside of the first magnet (e.g., the AF magnet 332, the first IS magnet 342, or the second IS magnet 352) may be shorter than a length of the magnet corresponding to the surface facing the first coil (e.g., the AF coil 333, the first IS coil 344, the second IS coil 345, the third IS coil 354, or the fourth IS coil 355).

In an embodiment, the second-type magnet may have a step between a surface facing outside of a first magnet (e.g., the AF magnet 332, the first IS magnet 342, or the second IS magnet 352) and a surface facing a first coil (e.g., the AF coil 333, the first IS coil 344, the second IS coil 345, the third IS coil 354, or the fourth IS coil 355), and a length of the magnet corresponding to the surface facing outside of the first magnet (e.g., the AF magnet 332, the first IS magnet 342, or the second IS magnet 352) may be shorter than a length of the magnet corresponding to the surface facing the first coil (e.g., the AF coil 333, the first IS coil 344, the second IS coil 345, the third IS coil 354, or the fourth IS coil 355).

In an embodiment, the third-type magnet may have a step between a surface facing outside of a first magnet (e.g., the AF magnet 332, the first IS magnet 342, or the second IS magnet 352) and a surface facing a first coil (e.g., the AF coil 333, the first IS coil 344, the second IS coil 345, the third IS coil 354, or the fourth IS coil 355), and a length of the magnet corresponding to the surface facing outside of the first magnet (e.g., the AF magnet 332, the first IS magnet 342, or the second IS magnet 352) may be longer than a length of the magnet corresponding to the surface facing the first coil (e.g., the AF coil 333, the first IS coil 344, the second IS coil 345, the third IS coil 354, or the fourth IS coil 355).

In an embodiment, the first magnet (e.g., the AF magnet 332, the first IS magnet 342, or the second IS magnet 352) may further include a fourth-type magnet disposed between the first-type magnet and the outside and having a magnetic field flowing from the outside to the first-type magnet, or a fifth-type magnet disposed between the second-type magnet and the outside and having a magnetic field flowing from the outside to the second-type magnet.

In an embodiment, the camera (e.g., the camera 300 of FIG. 3, the camera 1300 of FIG. 13, or the camera 1500 of FIG. 16) may include a second carrier (e.g., an IS carrier 314) configured to be movable by electromagnetic force, and a second actuator (e.g., the first IS actuator 340 or the second IS actuator 350) including a second magnet (e.g., the first IS magnet 342 or the second IS magnet 352), a third coil (e.g., the third IS coil 354 or the fourth IS coil 355), and a fourth coil (e.g., the third IS coil 354 or the fourth IS coil 355) configured to move the second carrier (e.g., the IS carrier 314).

In an embodiment, the second magnet (e.g., the first IS magnet 342 or the second IS magnet 352) may include a sixth-type magnet having a magnetic field directed from the outside of the second magnet (e.g., the first IS magnet 342 or the second IS magnet 352) toward the third coil (e.g., the third IS coil 354 or the fourth IS coil 355), a seventh-type magnet having a magnetic field directed from the third coil (e.g., the third IS coil 354 or the fourth IS coil 355) toward the outside of the second magnet (e.g., the first IS magnet 342 or the second IS magnet 352), and an eighth-type magnet disposed between the sixth-type magnet and the seventh-type magnet having a magnetic field flowing from the seventh-type magnet to the sixth-type magnet.

In an embodiment, the third coil (e.g., the third IS coil 354 or the fourth IS coil 355) may have a third predetermined length as a length between an inner diameter and an outer diameter or as a width of the coil.

In an embodiment, the fourth coil (e.g., the third IS coil 354 or the fourth IS coil 355) may be spaced apart from the third coil (e.g., the third IS coil 354 or the fourth IS coil 355) by a predetermined distance, and may have a second predetermined length as a length between an inner diameter and an outer diameter or as a width of the coil.

In an embodiment, the sum of the third predetermined length, the fourth predetermined length, and the predetermined distance may be a second length.

In an embodiment, the eighth-type magnet may have a size that is less than or equal to the second length.

In an embodiment, the camera (e.g., the camera 1300 of FIG. 13 or the camera 1500 of FIG. 16) may include a reflective member (e.g., the first prism 1305 or the second prism 1501) having at least one reflective surface.

In an embodiment, the first carrier (e.g., the prism carrier 1306, the IS carrier 1514, or the AF carrier 1515) and the second carrier (e.g., the prism carrier 1306, the IS carrier 1514, or the AF carrier 1515) may include an opening configured to accommodate the reflective member (e.g., the first prism 1305 or the second prism 1501).

In an embodiment, the first carrier (e.g., the prism carrier 1306, the IS carrier 1514, or the AF carrier 1515) may include a reflective member (e.g., the first prism 1305 or the second prism 1501) having at least one reflective surface.

In an embodiment, the first carrier (e.g., the prism carrier 1306, the IS carrier 1514, or the AF carrier 1515) may include a third actuator (e.g., the first rotation actuator 14500, the second rotation actuator 14510, or the first axis-moving actuator 1470) including a third magnet (e.g., the first prism magnet 1451, the second prism magnet 1452, the third prism magnet 1471, the tenth IS magnet 1521, the eleventh IS magnet 1522, or the eighth AF magnet 1523) and a fifth coil configured to move the first carrier (e.g., the prism carrier 1306, the IS carrier 1514, or the AF carrier 1515), and a fourth actuator (e.g., the first rotation actuator 14500, the second rotation actuator 14510, or the first axis-moving actuator 1470) including a fourth magnet (e.g., the first prism magnet 1451, the second prism magnet 1452, the third prism magnet 1471, the tenth IS magnet 1521, the eleventh IS magnet 1522, or the eighth AF magnet 1523) and a sixth coil configured to move the first carrier (e.g., the prism carrier 1306, the IS carrier 1514, or the AF carrier 1515).

In an embodiment, the third actuator (e.g., the first rotation actuator 14500, the second rotation actuator 14510, or the first axis-moving actuator 1470) and the fourth actuator (e.g., the first rotation actuator 14500, the second rotation actuator 14510, or the first axis-moving actuator 1470) may be configured to rotate the first carrier (e.g., the prism carrier 1306, the IS carrier 1514, or the AF carrier 1515) with respect to the center of the first carrier (e.g., the prism carrier 1306, the IS carrier 1514, or the AF carrier 1515).

In an embodiment, The third magnet (e.g., the first prism magnet 1451, the second prism magnet 1452, the third prism magnet 1471, the tenth IS magnet 1521, the eleventh IS magnet 1522, or the eighth AF magnet 1523) may include a ninth-type magnet having a magnetic field directed from the outside of the third magnet (e.g., the first prism magnet 1451, the second prism magnet 1452, the third prism magnet 1471, the tenth IS magnet 1521, the eleventh IS magnet 1522, or the eighth AF magnet 1523) toward the fifth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551), a tenth-type magnet having a magnetic field directed from the fifth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551) toward the outside of the third magnet (e.g., the first prism magnet 1451, the second prism magnet 1452, the third prism magnet 1471, the tenth IS magnet 1521, the eleventh IS magnet 1522, or the eighth AF magnet 1523), and an eleventh-type magnet disposed between the ninth-type magnet and the tenth-type magnet and having a magnetic field flowing from the tenth-type magnet to the ninth-type magnet.

In an embodiment, The eleventh-type magnet may have a size that is less than or equal to a distance between a center of a first stretched portion of the fifth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551) and a center of a second stretched portion of the fifth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551).

In an embodiment, the fourth magnet (e.g., the first prism magnet 1451, the second prism magnet 1452, the third prism magnet 1471, the tenth IS magnet 1521, the eleventh IS magnet 1522, or the eighth AF magnet 1523) may include a twelfth-type magnet having a magnetic field directed from the outside of the fourth magnet (e.g., the first prism magnet 1451, the second prism magnet 1452, the third prism magnet 1471, the tenth IS magnet 1521, the eleventh IS magnet 1522, or the eighth AF magnet 1523) toward the sixth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551), a thirteenth-type magnet having a magnetic field directed from the sixth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551) toward the outside of the fourth magnet (e.g., the first prism magnet 1451, the second prism magnet 1452, the third prism magnet 1471, the tenth IS magnet 1521, the eleventh IS magnet 1522, or the eighth AF magnet 1523), and a fourteenth-type magnet disposed between the twelfth-type magnet and the thirteenth-type magnet and having a magnetic field flowing from the thirteenth-type magnet to the twelfth-type magnet.

In an embodiment, the fourteenth-type magnet may have a size that is less than or equal to a distance between a center of a first stretched portion of the sixth coil and a center of a second stretched portion of the sixth coil (e.g., the ninth coil 1461, the tenth coil 1462, the eleventh coil 1481, the nineteenth IS coil 1531, the twentieth IS coil 1532, the twenty-first IS coil 1541, the twenty-second IS coil 1542, or the seventh AF coil 1551).

In an embodiment, the electronic device 101 may include a lens barrel, a third carrier (e.g., an AF carrier 1414) configured to move together with the lens barrel, a fifth actuator (e.g., a first long-stroke AF actuator 1420 or a second long-stroke AF actuator 1402) disposed on a first side of the third carrier (e.g., the AF carrier 1414) and configured to move the third carrier toward the first carrier (e.g., the prism carrier 1306, the IS carrier 1514, or the AF carrier 1515) by electromagnetic force, and a sixth actuator (e.g., the first long-stroke AF actuator 1420 or the second long-stroke AF actuator 1402) disposed on a second side of the third carrier (e.g., the AF carrier 1414) and configured to move the third carrier toward the first carrier (e.g., the prism carrier 1306, the IS carrier 1514, or the AF carrier 1515) by electromagnetic force.

In an embodiment, the fifth actuator (e.g., the first long-stroke AF actuator 1420 or the second long-stroke AF actuator 1402) may include a fifth magnet in which a plurality of magnets are arranged in a Halbach array, and a first coil rail including a plurality of coils.

In an embodiment, the sixth actuator (e.g., the first long-stroke AF actuator 1420 or the second long-stroke AF actuator 1402) may include a sixth magnet in which a plurality of magnets are arranged in a Halbach array, and a second coil rail including a plurality of coils.

The electronic device according to embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each element (e.g., a module or a program) of the above-described elements may include a single entity or multiple entities. According to an embodiment, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising a camera,
wherein the camera comprises:
a first carrier configured to be movable by electromagnetic force; and
a first actuator comprising a first magnet and a first coil configured to move the first carrier,
wherein the first magnet comprises:
a first-type magnet having a magnetic field directed from an outside of the first magnet toward the first coil;
a second-type magnet having a magnetic field directed from the first coil toward the outside of the first magnet; and
a third-type magnet disposed between the first-type magnet and the second-type magnet and having a magnetic field flowing from the second-type magnet to the first-type magnet, and
wherein the third-type magnet has a size that is less than or equal to a distance between a center of a first stretched portion of the first coil and a center of a second stretched portion of the first coil.

2. The electronic device according to claim 1,
wherein the first coil has a first predetermined length as a length between an inner diameter and an outer diameter or as a width of the coil,
wherein the first actuator is spaced apart from the first coil by a predetermined distance, and further comprises a second coil having a second predetermined length as a length between an inner diameter and an outer diameter or as a width of the coil, and
wherein a sum of the first predetermined length, the second predetermined length, and the predetermined distance is a first length.

3. The electronic device according to claim 2,
wherein the third-type magnet has a size that is less than or equal to the first length.

4. The electronic device according to claim 1,
wherein the first-type magnet has an inclined surface between a surface facing the outside of the first-type magnet and a surface facing the first coil, and a length of the magnet corresponding to the surface facing the outside of the first-type magnet is shorter than a length of the magnet corresponding to the surface facing the first coil,
wherein the second-type magnet has an inclined surface between a surface facing an outside of the second-type magnet and a surface facing the first coil, and a length of the magnet corresponding to the surface facing the outside of the second-type magnet is shorter than a length of the magnet corresponding to the surface facing a second coil, and
wherein the third-type magnet has an inclined surface between a surface facing an outside of the third-type magnet and a surface facing the first coil, and a length of the magnet corresponding to the surface facing the outside of the third-type magnet is longer than a length of the magnet corresponding to the surface facing the first coil.

5. The electronic device according to claim 1,
wherein the first-type magnet is configured to generate a magnetic field at a first predetermined angle from the outside of the first magnet toward a plurality of first IS coils, and
wherein the second-type magnet is configured to generate a magnetic field at a second predetermined angle from the first coil toward the outside of the first magnet.

6. The electronic device according to claim 1,
wherein the first-type magnet has a step between a surface facing the outside of the first magnet and a surface facing the first coil, and a length of the magnet corresponding to the surface facing the outside of the first magnet is shorter than a length of the magnet corresponding to the surface facing the first coil,
wherein the second-type magnet comprises a step between a surface facing the outside of the first magnet and a surface facing the first coil, and a length of the magnet corresponding to the surface facing the outside of the first magnet is shorter than a length of the magnet corresponding to the surface facing the first coil, and
wherein the third-type magnet comprises a step between a surface facing outside of the first magnet and a surface facing the first coil, and a length of the magnet corresponding to the surface facing the outside of the first magnet is longer than a length of the magnet corresponding to the surface facing the first coil.

7. The electronic device according to claim 1,
wherein the first magnet further comprises:
a fourth-type magnet disposed between the first-type magnet and an outside and having a magnetic field flowing from the outside to the first-type magnet; or
a fifth-type magnet disposed between the second-type magnet and the outside and having a magnetic field flowing from the outside to the second-type magnet.

8. The electronic device according to claim 1,
wherein the camera further comprises:
a second carrier configured to be movable by electromagnetic force; and
a second actuator comprising a second magnet, a third coil, and a fourth coil configured to move the second carrier,
wherein the second magnet comprises:
a sixth-type magnet having a magnetic field directed from an outside of the second magnet toward the third coil;
a seventh-type magnet having a magnetic field directed from the third coil toward an outside of the second magnet; and
an eighth-type magnet disposed between the sixth-type magnet and the seventh-type magnet and having a magnetic field flowing from the seventh-type magnet to the sixth-type magnet.

9. The electronic device according to claim 8,
wherein the third coil has a third predetermined length as a length between an inner diameter and an outer diameter or as a width of the coil,
wherein the fourth coil is spaced apart from the third coil by a predetermined distance and has a second predetermined length as a length between an inner diameter and an outer diameter or as a width of the coil, and
wherein a sum of the third predetermined length, the fourth predetermined length, and the predetermined distance is a second length.

10. The electronic device according to claim 9,
wherein the eighth-type magnet has a size that is less than or equal to the second length.

11. The electronic device of claim 8,
wherein the camera comprises a reflective member having at least one reflective surface, and
wherein the first carrier and the second carrier comprise an opening configured to accommodate the reflective member.

12. The electronic device according to claim 1,
wherein the first carrier comprises:
a reflective member having at least one reflective surface;
a third actuator comprising a third magnet and a fifth coil configured to move the first carrier; and
a fourth actuator comprising a fourth magnet and a sixth coil configured to move the first carrier, and
wherein the third actuator and the fourth actuator are configured to rotate the first carrier with respect to a center of the first carrier.

13. The electronic device according to claim 12,
wherein the third magnet comprises:
a ninth-type magnet having a magnetic field directed from an outside of the third magnet toward the fifth coil;
a tenth-type magnet having a magnetic field directed from the fifth coil toward the outside of the third magnet; and
an eleventh-type magnet disposed between the ninth-type magnet and the tenth-type magnet and having a magnetic field flowing from the tenth-type magnet to the ninth-type magnet, and
wherein the eleventh-type magnet has a size that is less than or equal to a distance between a center of a first stretched portion of the fifth coil and a center of a second stretched portion of the fifth coil.

14. The electronic device according to claim 12,
wherein the fourth magnet comprises:
a twelfth-type magnet having a magnetic field directed from an outside of the fourth magnet toward the sixth coil;
a thirteenth-type magnet having a magnetic field directed from the sixth coil toward outside of the fourth magnet; and
a fourteenth-type magnet disposed between the twelfth-type magnet and the thirteenth-type magnet and having a magnetic field flowing from the thirteenth-type magnet to the twelfth-type magnet, and
wherein the fourteenth-type magnet has a size that is less than or equal to a distance between a center of a first stretched portion of the sixth coil and a center of a second stretched portion of the sixth coil.

15. The electronic device according to claim 12,
wherein the electronic device comprises:
a lens barrel;
a third carrier configured to move together with the lens barrel;
a fifth actuator disposed on a first side of the third carrier and configured to move the third carrier toward the first carrier by electromagnetic force; and
a sixth actuator disposed on a second side of the third carrier and configured to move the third carrier toward the first carrier by electromagnetic force,
wherein the fifth actuator comprises:
a fifth magnet in which a plurality of magnets are arranged in a Halbach array; and
a first coil rail comprising a plurality of coils, and
wherein the sixth actuator comprises:
a sixth magnet in which a plurality of magnets are arranged in a Halbach array; and
a second coil rail comprising a plurality of coils.
